# EUROPEAN PATENT SPECIFICATION

(11) **EP 3 535 336 B1**
(45) Date of publication and mention of the grant of the patent: **11.08.2021**
(21) Application number: 17807960.4
(22) Date of filing: 31.10.2017
(51) Int. Cl.: C09D 133/04

(54) **COATINGS INCORPORATING NON-FLUORINATED CLEANABILITY ADDITIVES**
BESCHICHTUNGEN MIT NICHTFLUORIERTEN REINIGUNGSFÄHIGKEITSADDITIVEN
REVÊTEMENTS INCORPORANT DES ADDITIFS DE NETTOYABILITÉ NON FLUORÉS

(30) Priority: 01.11.2016 US 201662415549 P
(43) Date of publication of application: 11.09.2019
(73) Proprietor: The Chemours Company FC, LLC, Wilmington, DE 19801 (US)
(72) Inventor: BROWN, Gerald Oronde, Swedesboro New Jersey 08085 (US); CROSETTO, Tess, Philadelphia Pennsylvania 19123 (US); KOHLER, Ewa, West Chester Pennsylvania 19380 (US); SWOREN, John Christopher, Pennsylvania 19352 (US)
(74) Representative: Morf, Jan Stefan
(86) International application number: PCT/US2017/059221
(87) International publication number: WO 2018/085238

(56) References cited:
- DE-A1- 10 008 151
- GB-A- 1 511 652
- US-A1- 2009 075 063
- US-B1- 6 201 057

## Description

### FIELD OF THE INVENTION

Non-fluorinated hydrophilic compounds are employed in architectural coatings to provide surface effects to various articles.

### BACKGROUND OF THE INVENTION

Fluorinated polymer compositions are used in the preparation of a wide variety of surface treatment materials to provide surface effects to substrates. Many such compositions are fluorinated surfactants which contain predominantly eight or more carbons in the perfluoroalkyl chain to provide the desired properties. Honda, et al., in Macromolecules, 2005, 38, 5699-5705 teach that for perfluoroalkyl chains of greater than 8 carbons, orientation of the perfluoroalkyl groups, designated Rf groups, is maintained in a parallel configuration while for such chains having 6 or less carbons, reorientation occurs. This reorientation is recited to decrease surface properties such as contact angle. Thus, compounds containing shorter perfluoroalkyl chains or having no fluorine content have traditionally exhibited lower performance. Fluoroadditives have also been used to improve cleanability of paints, including latex paints, which generally have poor stain and soil resistance.

In GB 1 511 652 A, US 2009/075063 A1, US 6 201 057 B1 and DE 100 08 151 A1 further coating compositions for paints applications are described.

### BRIEF SUMMARY OF THE INVENTION

The need exists for non-fluorinated additive compounds that provide surface effects to architectural coatings, with performance results comparable to fluorinated treating agents. The present invention meets these needs.

The present invention according to the appended claims relates to a coating composition comprising a coating base and 0.1 to 10% by weight of an additive compound, based on the total solids weight of the coating, where the additive compound is at least one of an alkali metal salt of poly(meth)acrylic acid, compound or amine salt of poly(meth)acrylic acid, silicone polyether, alkali metal salt of silicone polyether carboxylate, ammonium compound or amine salt of silicone polyether carboxylate, alkali metal salt of hydrolyzed α-olefin/maleic anhydride copolymer, ammonium compound or amine salt of hydrolyzed α-olefin/maleic anhydride copolymer, alkali metal salt of esterified α-olefin/maleic anhydride copolymer, ammonium compound or amine salt of esterified α-olefin/maleic anhydride copolymer, α-olefin/maleic anhydride copolymer amic acid resin, salt of α-olefin/maleic anhydride copolymer amic acid resin, polycarboxylate calcium sequestrants, or mixtures thereof; and where the coating base is an architectural paint, architectural stain, or architectural clear coating,
where the α-olefin is selected from styrene or α-methyl styrene; and where the silicone polyether, alkali metal salt of silicone polyether carboxylate, ammonium compound or amine salt of silicone polyether carboxylate is from formulas (I) or (II) as claimed in present claim 1.

The present invention according to claim 15 further comprises a method of imparting a surface effect to an article.

### DETAILED DESCRIPTION OF THE INVENTION

Trademarks are indicated herein by capitalization. Features of the embodiments of the present invention as described in the Detailed Description of the Invention can be combined in any manner.

The present invention provides coatings and coated articles having improved water repellency, oil or stain repellency, cleanability and/or other surface effects. The coating compositions provide enhanced performance compared to traditional non-fluorinated commercially available treatment agents. The coatings formed are durable, by which is meant that the coatings are lasting films that are not readily removed by water or cleaning agents. In one aspect, the coatings are not soluble or dispersable in water or cleaning agents once they are dry, and in another aspect, the coatings withstand multiple cleanings without loss of performance.

In one aspect, the present invention relates to a coating composition as claimed in claim 1.

Alkali metals used to form the salts include but are not limited to Li, Na, and K. The term "ammonium compound" is intended to mean a compound having an ammonium cation. Ammonium compounds include but are not limited to NH₄⁺ or dialkyl ammonium compounds such as dimethyl ammonium compounds or diethyl ammonium compounds. Amine compounds used to form salt are compounds that form cations, including but not limited to amino acids or aminoalkanols. The term "copolymer" is intended to mean a polymeric compound having at least two different monomeric units. The term includes terpolymers and polymers having more than three different monomeric units.

As used herein, the term "coating base" is a composition that is applied to a substrate for the purpose of creating a lasting film on the substrate surface. Such coating bases include compositions with polymer resins, such as architectural paints architectural clear coats, and architectural clear coatings. The term "architectural" is used to describe paints and coatings typically used to protect buildings and architectural structures, such as housing, decking, and industrial buildings. In one aspect, the additive compound is not reactive with the polymer resin of the coating base. Once applied, the coating may have a dry film thickness of at least 0.1 mils; in another aspect, the coating may have a dry film thickness of at least 0.3 mils; and in another aspect, the coating may have a dry film thickness of greater than 3 mils. Depending on the system (epoxy , acrylic, latex, urethane, polyurethane, etc.) and the number of coats (including primer, body, and top coat), the final dry film thickness can be much greater, sometimes greater than 30 mils, for protection in industrial applications.

In one aspect, the coating composition comprises 40 to 99.9% by weight of a polymer resin, and comprises 0 to 50% by weight of additional components, based on the total solids weight of the coating composition. The polymer resin is part of the coating base. In another aspect, the coating composition comprises 40 to 99.8% by weight of the polymer resin, and comprises 0 to 50% by weight of additional components, based on the total solids weight of the coating composition. The coating composition may also contain a liquid carrier that is not present once the coating is dry or solid, such as water or organic solvent. In one aspect, the liquid carrier is water. Additional components present in the coating composition may include but are not limited to pigments such as dyes or Ti0₂; surfactants; curing agents; pH adjustors; or wetting agents.

In the appended claims, the additive compound is selected from at least one of a, b, c, or d: a) an alkali metal salt of poly(meth)acrylic acid, ammonium compound salt of poly(meth)acrylic acid, amine salt of poly(meth)acrylic acid, b) silicone polyether, alkali metal salt of silicone polyether carboxylate, ammonium compound salt of silicone polyether carboxylate, or amine salt of silicone polyether carboxylate; c) alkali metal salt of hydrolyzed α-olefin/maleic anhydride copolymer, ammonium compound or amine salt of hydrolyzed α-olefin/maleic anhydride copolymer, alkali metal salt of esterified α-olefin/maleic anhydride copolymer, ammonium compound or amine salt of esterified α-olefin/maleic anhydride copolymer, α-olefin/maleic anhydride copolymer amic acid resin, salt of α-olefin/maleic anhydride copolymer amic acid resin, ; d) polycarboxylate calcium sequestrants; or mixtures thereof. In one aspect, the additive compound comprises at least two of a, b, c, or d; meaning the additive compound comprises at least one compound from each of a and b, a and c, a and d, b and c, b and d, or c and d. In one aspect, the additive compound comprises at least three of a, b, c, or d; meaning the additive compound comprises at least one compound from each of a, b, and c; a, b, and d; a, c, and d; or b, c, and d. In one aspect, the additive compound comprises at least one compound from each of a, b, c, and d. In one aspect, the pH of the additive compound, including mixtures of additive compounds, is from about 7 to about 10.5.

In one aspect, the additive compound is at least one compound selected from silicone polyether, alkali metal salt of silicone polyether carboxylate, ammonium compound salt of silicone polyether carboxylate, amine salt of silicone polyether carboxylate, or mixtures thereof. In one embodiment, the additive compound or mixture of compounds is soluble or dispersible in water at 1 % by weight at room temperature.

When the additive compound is selected from a silicone polyether or silicone polyether carboxylate salt, it may be of the formula (I): 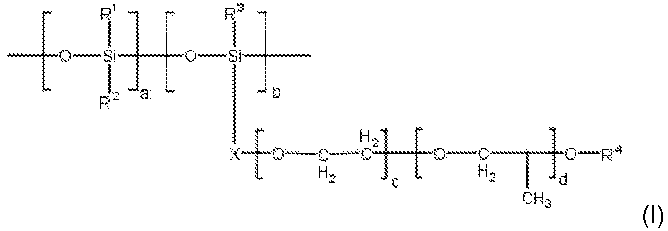 wherein R¹, R², and R³ are independently C₁-C₈ alkyl groups; X is a linear or branched C₁-C₄ alkylene group; R⁴ is independently H or -C(O)-Y-C(O)O⁻M⁺; Y is a linear or branched, saturated or unsaturated C₁-C₅ alkylene group; M is independently H, alkali metal, NH₄⁺, dialkyl ammonium cation, or amine cation; a and b are independently integers of 1 to 40 where a+b is an integer of at least 2; and c and d are independently integers of 0 to 20 where c+d is an integer of at least 1. The compounds have significant hydrophilic content by the incorporation of the silicone polyether monomeric unit. Such polymers may optionally include additional repeat units, such as alkyl siloxane units having alkyl groups of C₁-C₆. In one aspect, b is at least 1; in another aspect, b is at least 2, and in a third aspect, b is at least 3. In one aspect, a+b is at least 2; in another aspect, a+b is at least 4, and in a third aspect, a+b is at least 6. In one embodiment, the additive compound is soluble or dispersible in water at 1 % by weight at room temperature. Where R⁴ is H, the additive compound is a silicone polyether. Where R⁴ is -C(O)-Y-C(O)O⁻M⁺, the compound is a polycarboxylate including but not limited to a silicone polyether succinate, silicone polyether malonate, or silicone polyether propanate. In one aspect, Y is a linear or branched C₁-C₅ alkylene group that optionally contains one olefin group; and in another aspect, Y is a linear or branched alkylene C₂ to C₄ that optionally contains one olefin group.

In another aspect, the silicone polyether additive compound may be of the formula (II): 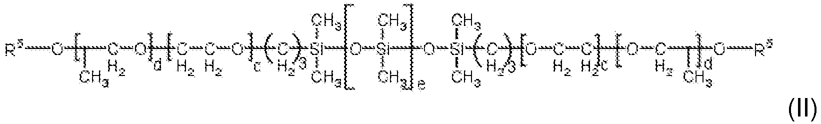 wherein R⁵ is H, a C₁-C₅ alkyl group, or -C(O)-Y-C(O)O⁻M⁺; Y is a linear or branched, saturated or unsaturated C₁-C₅ alkylene group; M is independently H, alkali metal, NH₄⁺, dialkyl ammonium cation, or amine cation; e is an integer of 1 to 40; and c and d are independently integers of 0 to 20 where c+d is an integer of at least 1. In one aspect, R⁵ is H or CH₃. The compounds have significant hydrophilic content by the incorporation of the alkoxide units at the endgroups. In one aspect, e is at least 2; in another aspect, e is at least 4, and in a third aspect, e is at least 6.

The -(OCH₂CH₂)- of formula (I) or (II) represents oxyethylene groups (EO) and -(OCH₂CH(CH₃))- represents oxypropylene groups (PO). These compounds can contain only EO groups, only PO groups, or mixtures thereof in random or block configuration. These compounds can also be present as a tri-block copolymer designated PEG-PPG-PEG (polyethylene glycol-polypropylene glycol-polyethylene glycol), for example. In one embodiment, c+d of formula (I) or (II) is 1 to 30; in another embodiment, c+d is 2 to 20; and in a third embodiment, c+d is 6 to 16.

In one embodiment, the additive compound is at least one compound selected from an alkali metal salt of poly(meth)acrylic acid, ammonium compound salt of poly(meth)acrylic acid, amine salt of poly(meth)acrylic acid, or mixtures thereof. The use of parentheses in the term "(meth)acrylic" indicates that the term covers both acrylic and methacrylic substances. Such compounds are available commercially, or can be obtained by neutralizing a poly(meth)acrylic acid. In one aspect, the molecular weight of the poly(meth)acrylic acid salt, as measured by the Mₙ of the poly(meth)acrylic acid is at least 2,000 Da; in another aspect, the molecular weight Mₙ is at least 10,000 Da; and in another aspect, the molecular weight Mₙ is at least 20,000 Da.

Molecular weight Mₙ and M_{w} can be measured by a size exclusion chromatographer using a polymethacrylic acid (PMAA) calibration standard. For example, the polymer solutions were diluted to 3.0 ± 0.3 mg/mL in 0.1 M Na₂HPO₄, allowed to sit at ambient temperature for 4 days, and passed through 0.2 µm syringe filter. 20 µL of polymer solution was injected in the same mobile phase through AGILENT 1100 system equipped with a G1362A refractive index detector, pumped at 1.0 mL/min for 40 min through two PSS SUPREMA columns (10,000 A, 10 µm; 1,000 A, 5 µm, both 8 x 300 mm) held at 30 °C. PMAA calibration standards (PSS) were used to generate a calibration curve from 1,310 to 549,000 Dalton.

In one embodiment, the additive compound is at least one compound selected from an alkali metal salt of hydrolyzed α-olefin/maleic anhydride copolymer, ammonium compound or amine salt of hydrolyzed α-olefin/maleic anhydride copolymer, alkali metal salt of esterified α-olefin/maleic anhydride copolymer, ammonium compound or amine salt of esterified α-olefin/maleic anhydride copolymer, α-olefin/maleic anhydride copolymer amic acid resin, salt of α-olefin/maleic anhydride copolymer amic acid resin, or mixtures thereof. The α-olefin is selected from styrene or α-methyl styrene. Such compounds are available commercially, or can be obtained by neutralizing an α-olefin /maleic anhydride copolymer. Salts of hydrolyzed α-olefin/maleic anhydride copolymers contain the repeat unit -[CH(COO⁻M⁺)-CH(COO⁻M⁺)]-, where M is an alkali metal, ammonium, or amine. The esterified salts can be obtained by esterifying the maleic anhydride groups and then neutralizing the copolymer. Salts of esterified α-olefin/maleic anhydride copolymers contain the repeat unit -[CH(COOR)-CH(COO⁻M⁺)]-, where R is a monovalent organic group, and M is an alkali metal, ammonium, or amine. In one asapect, R is a linear or branched C₁-C₁₂ alkyl group. Where the additive is an α-olefin/maleic anhydride copolymer amic acid resin or salt thereof, the copolymers contain the repeat unit -[CH(C(O)-NH-CH₃)-CH(COO⁻M⁺)]-, where M is H, an alkali metal, ammonium, or amine. In one aspect, the molecular weight of the styrene/maleic anhydride copolymer salt, as measured by the Mₙ, is at least 1,000 Da; in another aspect, the molecular weight Mₙ is at least 1,500 Da; and in another aspect, the molecular weight Mₙ is at least 2,000 Da. The maleic anhydride repeat unit, including the hydrolyzed, esterified, or amic acid forms, may compose at least 19 weight % of the copolymer. In one aspect, the maleic anhydride repeat unit may compose at least 30 weight % of the copolymer, and in another aspect, the maleic anhydride repeat unit may compose at least 50 weight % of the copolymer.

In one embodiment, the additive compound is a polycarboxylate calcium sequestrant, or mixtures thereof. The use of the term "polycarboxylate calcium sequestrant" in this text refers to non-polymeric organic compounds having multiple carboxylate groups, where the compounds are capable of forming a chelate complex with calcium. For example, the additive compound may be an alkali metal aminopolycarboxylate, an ammonium compound aminopolycarboxylate, or amine salt of aminopolycarboxylate. Such compounds may contain one or more nitrogen atoms connected through alkylene groups to two or more carboxylate groups. In one aspect, the polycarboxylate calcium sequestrants contain at least two carboxylate groups; in another aspect, the polycarboxylate calcium sequestrants contain at least three carboxylate groups; and in another aspect, the polycarboxylate calcium sequestrants contain at least four carboxylate groups. Examples of polycarobylate calcium sequestrants include but are not limited to salts of glyconic acid, salts of ethylenediamine tetraacetate, salts of fura-2, salts of aminodiacetic acid, salts of nitrilotriacetic acid, salts of diethylenetriaminepentaacetic acid, salts of ethylenediamine-N,N'-disuccinic acid, salts of ethylene glycol-bis(β-aminoethyl ether)-N,N,N',N'-tetraacetic acid, salts of 1,2-bis(*o*-aminophenoxy)ethane-N,N,N',N'-tetraacetic acid, salts of 1,4,7,10-tetraazacyclododecane-1,4,7,10-tetraacetic acid, salts of L-glutamic acid N,N-diacetic acid, salts of polyaspartate, salts of 1,4,7,10-tetraazacyclododecane-1,4,7,10-tetraacetic acid, or salts of iminodisuccinate.

The coating on the article surface comprises 0.1 to 10% by weight of the hydrophobic compound, based on the total solids weight of the coating. In a second aspect, the coating on the article surface comprises 0.2 to 5% by weight of the hydrophobic compound; and in a third aspect, 0.25 to 2% by weight of the hydrophobic compound based on the total solids weight of the coating. The term "solids weight of the coating", is used to mean the sum of the coating components that would remain once the aqueous, solvent, or other liquid components evaporated. In other words, it is the sum of the non-aqueous, non-solvent, and non-volatile components of the coating. The coating may further comprise aqueous or organic solvents, polymer resins, coating bases that contain polymer resins, pigments, functional additives, surfactants, and hydrophobic surface effect agents.

The coating composition may further comprise a hydrophobic surface effect agent. For example, the coating composition may further comprise a fatty acid ester of cyclic or acyclic polyols, fatty esters of polycarboxylic acids, hydrophobic non-fluorinated cationic acrylic polymers, hydrophobic non-fluorinated anionic acrylic polymers, hydrophobic non-fluorinated nonionic acrylic polymers, partially fluorinated urethanes, hydrophobic non-fluorinated urethanes, cationic partially fluorinated acrylic polymers or copolymers, nonionic partially fluorinated acrylic polymers or copolymers, partially fluorinated acrylamide polymers or copolymers, fluorinated or non-fluorinated phosphates, fluorinated ethoxylates, fluorinated or non-fluorinated organosilanes, silicones, waxes, including parafins, and mixtures thereof.

In one embodiment, the hydrophobic surface effect agents may be used in an amount of 0.1 to 10% by weight, based on the total solids weight of the coating. In another embodiment, the hydrophobic surface effect agents may be used in an amount of 0.1 to 5% by weight, based on the total solids weight of the coating. Hydrophobic surface effect agents provide surface effects such as moisture control, strength, anti-slip, antistatic, anti-snag, anti-pill, stain repellency, stain release, soil repellency, soil release, water repellency, oil repellency, odor control, antimicrobial, sun protection, anti-blocking, cleanability, dust resistance, leveling, corrosion resistance, acid resistance, anti-fog, or anti-ice, and similar effects. Some stain release and soil release agents are hydrophilic and include compounds such as polymethyl acrylates or hydrophilic urethanes.

Suitable fatty acid esters of cyclic or acyclic polyols include reaction products of fatty acids with cyclic or acyclic sugar alcohols, or pentaerythritols including dipentaerythritol, which may also contain internal alkoxide units. Fatty esters of polycarobyxlic acids include reaction products of long-chain alkanols with polycarboxylic acids. Examples of polyols and polycarboxylic acids include but are not limited to glucose, 1,4-anhydro-D-glucitol, 2,5-anhydro-D-mannitol, 2,5-anhydro-L-iditol, isosorbide, sorbitan, glyceraldehyde, erythrose, arabinose, ribose, arabinose, allose, altrose, mannose, xylose, lyxose, gulose, glactose, talose, fructose, ribulose, mannoheptulose, sedohelptulose, threose, erythritol, threitol, glucopyranose, mannopyranose, talopyranose, allopyranose, altropyranose, idopyranose, gulopyranose, glucitol, mannitol, erythritol, sorbitol, arabitol, xylitol, ribitol, galactitol, fucitol, iditol, inositol, pentaerythritol, dipentaerythritol, volemitol, gluconic acid, glyceric acid, xylonic acid, galactaric acid, ascorbic acid, citric acid, gluconic acid lactone, glyceric acid lactone, xylonic acid lactone, glucosamine, galactosamine, or mixtures thereof. Suitable fatty acids include, but are not limited to, caprylic acid, capric acid, lauric acid, mysteric acid, palmitic acid, stearic acid, arachidic acid, behenic acid, lignoceric acid, palmitoleic acid, lineolic acid, oleic acid, erucic acid, alkoxylated versions of these acids, and mixtures thereof. In one embodiment, the fatty acid esters or fatty esters contain linear or branched alkyl groups having 11 to 29 carbons, and in another embodiment, the contain linear or branched alkyl groups having 17 to 21 carbons. Particular examples include mono-substituted, di-substituted, or tri-substituted sorbitans, such as SPAN, sorbitan stearates, or sorbitan behenins; mono-, di-, and tri-substituted sorbitans derived from palmitoleic acid, lineolic acid, arachidonic acid, and erucic acid; polysorbates such as polysorbate tristearate and polysorbate monostearate; citrates that are mono-substituted, di-substituted, or tri-substituted with alkyl groups; pentaerythriol esters that are mono-substituted, di-substituted, or tri-substituted with alkyl groups.

Superior properties, along with desirable properties of low yellowing and good durability, are imparted to articles by the combination of the hydrophobic compounds to hydrophobic surface effect agents before application to the articles. These combined blends are applied to the articles in the form of a dispersion in water or other solvent either before, after or during the application of other treatment chemicals.

Of particular interest are fluorinated polymers useful as hydrophobic surface effect agents to provide repellency properties to the surface of treated substrates. These include fluorochemical compounds or polymers containing one or more fluoroaliphatic groups (designated here as Rf groups) which are fluorinated, stable, inert, and non-polar, preferably saturated, monovalent, and both oleophobic and hydrophobic. The Rf groups contain at least 3 carbon atoms, preferably 3 to 20 carbon atoms, more preferably 4 to 12 carbon atoms, and most preferably about 4 to about 6 carbon atoms. The Rf groups may contain straight or branched chain or cyclic fluorinated alkylene groups or combinations thereof. The terminal portion of the Rf groups is preferably a perfluorinated aliphatic group of the formula CₙF₂ₙ₊₁ wherein n is from about 3 to about 20. Examples of fluorinated polymer treating agents are CAPSTONE and ZONYL available from The Chemours Company, Wilmington, DE; ASAHI GARD from Asahi Glass Company, Ltd., Tokyo, Japan; UNIDYNE from Daikin America, Inc., Orangeburg, NY; SCOTCHGARD from 3M Company, St. Paul, MN; and NANO TEX from Nanotex, Emeryville, CA.

Examples of such fluorinated polymers include Rf-containing polyurethanes and poly(meth)acrylates. Especially preferred are copolymers of fluorochemical (meth)acrylate monomers with a copolymerizable monovinyl compound or a conjugated diene. The copolymerizable monovinyl compounds include alkyl (meth)acrylates, vinyl esters of aliphatic acids, styrene and alkyl styrene, vinyl halides, vinylidene halides, alkyl esters, vinyl alkyl ketones, and acrylamides. The conjugated dienes are preferably 1,3-butadienes. Representative compounds within the preceding classes include the methyl, propyl, butyl, 2-hydroxypropyl, 2-hydroxyethyl, isoamyl, 2-ethylhexyl, octyl, decyl, lauryl, cetyl, and octadecyl acrylates and methacrylates; vinyl acetate, vinyl propionate, vinyl caprylate, vinyl laurate, vinyl stearate, styrene, alpha methyl styrene, p-methylstyene, vinyl fluoride, vinyl chloride, vinyl bromide, vinylidene fluoride, vinylidene chloride, allyl heptanoate, allyl acetate, allyl caprylate, allyl caproate, vinyl methyl ketone, vinyl ethyl ketone, 1,3-butadiene, 2-chloro-1,3-butadiene, 2,3-dichloro-1,3-butadiene, isoprene, N-methylolacrylamide, N-methylolmethacrylamide, glycidyl acrylate, glycidyl methacrylate, amine-terminated (meth)acrylates, and polyoxy(meth)acrylates.

Hydrophobic non-fluorinated acrylic polymers include copolymers of monovinyl compounds, including alkyl (meth)acrylates, vinyl esters of aliphatic acids, styrene and alkyl styrene, vinyl halides, vinylidene halides, alkyl esters, vinyl alkyl ketones, and acrylamides. The conjugated dienes are preferably 1,3-butadienes. Representative compounds within the preceding classes include the methyl, propyl, butyl, 2-hydroxypropyl, 2-hydroxyethyl, isoamyl, 2-ethylhexyl, octyl, decyl, lauryl, cetyl, and octadecyl acrylates and methacrylates; vinyl acetate, vinyl propionate, vinyl caprylate, vinyl laurate, vinyl stearate, styrene, alpha methyl styrene, p-methylstyene, vinyl fluoride, vinyl chloride, vinyl bromide, vinylidene fluoride, vinylidene chloride, allyl heptanoate, allyl acetate, allyl caprylate, allyl caproate, vinyl methyl ketone, vinyl ethyl ketone, 1,3-butadiene, 2-chloro-1,3-butadiene, 2,3-dichloro-1,3-butadiene, isoprene, N-methylolacrylamide, N-methylolmethacrylamide, glycidyl acrylate, glycidyl methacrylate, amine-terminated (meth)acrylates, and polyoxy(meth)acrylates.

Hydrophobic non-fluorinated urethanes include, for example, urethanes synthesized by reacting an isocyanate compound with the hydrophobic compounds described above as an alcohol reagent. These compounds are described in US2014/0295724 and US2016/0090508. Hydrophobic non-fluorinated nonionic acrylic polymers include, for example, polymers made by polymerizing or copolymerizing an acrylic ester of the hydrophobic compounds described above. Such compounds are described in US2016/0090686.

The additive compounds and surface active agents are effectively introduced to the coating composition by thoroughly stirring it in at room or ambient temperature. More elaborate mixing can be employed such as using a mechanical shaker or providing heat or other methods.

The coating composition of the present invention optionally further comprises additional components such as additional treating agents or finishes to achieve additional surface effects, or additives commonly used with such agents or finishes. One or more such treating agents or finishes can be combined with the blended composition and applied to the article. Other additives commonly used with such treating agents or finishes may also be present such as surfactants, pH adjusters, cross linkers, wetting agents, and other additives known by those skilled in the art. Further, other extender compositions are optionally included to obtain a combination of benefits.

The coating is in the form of a paint, stain, sealer, or other clear coating, and the coating further comprises a coating base. In one embodiment, the the coating base is selected from the group consisting of an acrylic polymer, epoxy polymer, vinyl polymer, and polyurethane polymer in the form of an inerior house paint, exterior house paint, architectural stain, or architectural clear coating. Such paints, usually comprising a polymer resin, a liquid carrier, and functional additives, are readily available in the marketplace under a number of major brands. Such coatings may be unpigmented or may be pigmented with compounds including but not limited to titanium dioxide.

In claim 15, the invention further comprises a method of imparting a surface effect to an article comprising contacting a surface of the article with a coating composition, wherein the coating comprises a coating base and 0.1 to 10% by weight of an additive compound, based on the total solids weight of the coating, where the additive compound is at least one of an alkali metal salt of poly(meth)acrylic acid or copolymer thereof, ammonium compound or amine salt of poly(meth)acrylic acid or copolymer thereof, silicone polyether, alkali metal salt of silicone polyether carboxylate, ammonium compound or amine salt of silicone polyether carboxylate, alkali metal salt of hydrolyzed α-olefin/maleic anhydride copolymer, ammonium compound or amine salt of hydrolyzed α-olefin/maleic anhydride copolymer, alkali metal salt of esterified α-olefin/maleic anhydride copolymer, ammonium compound or amine salt of esterified α-olefin/maleic anhydride copolymer, α-olefin/maleic anhydride copolymer amic acid resin, salt of α-olefin/maleic anhydride copolymer amic acid resin, polycarboxylic acid calcium sequestrants, or mixtures thereof; and where the coating base is an architectural paint, architectural stain, or architectural clear coating.

The articles may include but are not limited to a unglazed concrete, brick, tile, granite, limestone, marble, grout, mortar, statuary, monument, wood, composite material, terrazzo, gypsum board, wall or ceiling panel, or a combination thereof, or a combination thereof. The contacting step may occur by applying the hydrophobic compound by liquid carrier with the coating base. The additive compound may be in the form of an aqueous solution, aqueous dispersion, organic solvent solution or dispersion, or cosolvent solution or dispersion. The contacting step with the substrate may occur by any conventional method, including but not limited to spraying, rolling, brushing, dripping, or screen printing.

The final coating on the article surface will be a solidified, lasting, permanent coating. In another aspect, the method further comprises the step of solidifying the coating by drying,. The liquid carrier may be dried by heating or air drying to allow for evaporation of the liquid carrier, thus leaving a permanent solid coating.

### Test Methods and Materials

All solvents and reagents, unless otherwise indicated, were purchased from Sigma-Aldrich, St. Louis, MO, and used directly as supplied. MPEG 750 is a poly(ethylene glycol) methyl ether 750 and is commercially available from Sigma-Aldrich, St. Louis, MO.
L-lysine is commercially available from Shaanxi Top Pharma, Xi'an, China.

VERSENE 100 XL is a 40% aqueous solution of tetrasodium ethylenediaminetetraacetate, and DOWFAX 2A1 is an alkyldiphenyloxide disulfonate anionic surfactant, all commercially available from Dow Chemical, Midland, Michigan.

Tetrasodium *N,N*-Bis-(carboxymethyl)-L-glutamate (TSCMG) is commercially available as a 40% aqueous solution; and FLEXISPERSE 875 is an aqeous acrylic acid/maleic anhydride copolymer with a pH of 6.5±0.5 and a molecular weight M_{w} of 70,000 Da, both available from TCI America, Portland, OR.

BAYPURE CX 100 is a 35% aqueous solution of tetrasodium iminosuccinate, and BAYPURE DS 100 is a 40% aqueous solution of sodium polyaspartate, both commercially available from Lanxess, Cologne, Germany.

DISSOLVINE GL-47-S is a 47% aqueous solution of tetrasodium salt of L-glutamic acid N,N-diactic acid, commercially available from Akzo-Nobel, Amsterdam, Netherlands.

SILUBE CS-1 is a PEG-8-dimethicone succinate, SILSURF D212-CG is a PEG-12 dimethicone, SILSURF DI-1010 is a PEG-10 dimethicone, SILSURF DI-1017, SILSURF J208 is a high molecular weight PEG-8 dimethicpone, SILSURF J208-412 is lauryl PEG-8 dimethicone, SILSURF A008-UP is a low molecular weight ethoxylated polydimethylsiloxane, SILSURF 1108 is a polydimethylsiloxane copolymer, SILSURF E608 is a PEG-8 dimethicone, and SILSURF C410 is a PEG-10 dimethicone, all commercially available from Siltech, Dacula, GA.

SMA 1000 H solution is an aqueous ammonium salt of 1:1 styrene / maleic anhydride copolymer with a molecular weight Mₙ=2000 and M_{w}=5500, SMA 1000 HK is an aqueous potassium salt of styrene maleic anhydride copolymer, SMA 2000 H is an aqueous ammonium salt of 2:1 styrene / maleic anhydride copolymer, and SMA 3000 H is an aqueous ammonium salt of 3:1 styrene / maleic anhydride copolymer all available from TOTAL Cray Valley, Exton, PA.

Polysciences PMAA is a poly(methacrylic acid) of molecular weight Mₙ=70,000 Da and M_{w} = 246,000 Da commercially available from Polysciences, Inc., Warrington, PA.

CARBOSPERSE K-765 is a 30% aqueous sodium salt of poly(methacrylic acid) with a molecular weight Mₙ=22,600 Da and M_{w} of 30,000 Da commercially available from Lubrizol, Cleveland, OH.

AQUATREAT AR4, AQUATREAT AR6, and AQUATREAT AR7H are poly(acrylic acid) polymers of molecular weight M_{w} 250,000, 500,000, and 1.2 million, respsectively; and AQUATREAT AR235 is a poly(methacrylic acid) of molecular weight M_{w} 16,000. All are available from Akzo-Nobel, Amsterdam, Netherlands.

CAPSTONE FS-81 is a fluorinated surfactant; CAPSTONE FS-87 is a fluoropolymer; CAPSTONE FS-50 is an amphoteric fluorosurfactant; CAPSTONE TR is a fluorinated amphiphilic condensation polymer stain release; ZELAN 8719 is a non-fluorinated product; ZELAN CA-72 is a non-fluorinated durable water repellent; and CAPSTONE FS-61 is an anionic fluorinated surfactant, all available from The Chemours Company, Wilmington, DE.

STRODEX PK-OVOC is a phosphate coester of aliphatic alcohols, STRODEX PK-80N is a poly(oxy-1,2-ethanediyl)-alpha-tridecyl-omega-hydroxy isooctylphophate potassium salt, STRODEX KM-OVOC is a potassium salt of phosphate coester of aliphatic alcohol with aliphatic ethoxylate surfactant, STRODEX PK-85NV is a potassium salt of phosphate coester of aliphatic alcohol with aliphatic ethoxylate surfactant, and STRODEX KM-400LV is a hydrophobic potassium salt of phosphate alcohol ester surfactant, all available from Ashland Chemicals, Covington, KY.

STS-30 is a sorbitan tristearate compound available from DuPont, Wilmington, DE.

DESMODUR N100 is an isocyanate compound available from Bayer Corporation, Pittsburgh, PA.

ARMEEN DM18D is available from Akzo Nobel, Bridgewater, NJ.

The following test methods and materials were used in the examples herein.

### Test Methods

### Dosing of Polymer Additives in Paint and Test Panel Application

Additive compounds of the present invention are added to selected commercially available interior and exterior latex paints that are, prior to dosing, free of fluoroadditives. The sample is mixed using an overhead Cowles Blade stirrer at 300 rpm for 5 minutes. The mixture is then transferred to a glass jar, sealed and placed on a roll mill for at least 1-2 hours to allow uniform mixing of the additive. The samples are then drawn down uniformly on a black Leneta Mylar® card (5.5" x 10") via a BYK-Gardner drawdown apparatus using 5 mL bird-applicator, to yield a wet paint film with a film thickness of 5 mils. The paint films are then allowed to dry at room temperature for 7 days to yield dry paint films with a film thickness of about 2.5 mils.

### Test Method 1. Evaluation of Water and Oil Repellency via Contact Angle (CA) Measurement

Water and oil contact angle (CA) measurements are used to test for the migration of fluoroadditive to the surface of the paint film. Testing is performed by goniometer on 1 inch strips of Leneta panel coated with dried paint film. A Ramé-Hart Standard Automated Goniometer Model 200 employing DROPimage standard software and equipped with an automated dispensing system, 250 µl syringe, and illuminated specimen stage assembly is used. The goniometer camera is connected through an interface to a computer, allowing the droplet to be visualized on a computer screen. The horizontal axis line and the cross line can both be independently adjusted on the computer screen using the software. Prior to contact angle measurement, the sample is placed on the sample stage and the vertical vernier is adjusted to align the horizontal line (axis) of the eye piece coincident to the horizontal plane of the sample. The horizontal position of the stage relative to the eye piece is positioned so as to view one side of the test fluid droplet interface region at the sample interface.

To determine the contact angle of the test fluid on the sample, approximately one drop of test fluid is dispensed onto the sample using a 30 µL pipette tip and an automated dispensing system to displace a calibrated amount of the test fluid. For oil contact angle measurements, hexadecane is suitably employed, and deionized water is used for water contact angle measurements. Horizontal and cross lines are adjusted via the software in case of the Model 200 after leveling the sample via stage adjustment, and the computer calculates the contact angle based upon modeling the drop appearance. The initial contact angle is the angle determined immediately after dispensing the test fluid to the sample surface. Initial contact angles above 30 degrees are indicators of effective oil repellency.

### Test Method 2. Household Cleanability Ratings

The household cleanability test is based on ASTMD3450, which describes the method of cleanability for leneta stain on interior paints. This version of cleanability uses the same basic principles and primarily only changes the stains being applied to the paint. The test material (paint) is applied to a black, mylar panel and allowed to dry for 7 to 10 days. Application of stains is dependent on the stains selected. Crayon, marker, and pencil stains are applied by filling in an approximately one-inch block with even pressure. Liquid stains such as coffee, tea, and wine, are applied by holding the panel at an angle and using a pipette to evenly coat the stain. Lipstick stains are applied by using a ruler as a guide. Stains are allowed to sit for 30 minutes before being removed. The stains used are defined in Table 1 below.

**Table 1. Stain Definitions**

| 1 | 2 | 3 | 4 | 5 | 6 | 7 |
|---|---|---|---|---|---|---|
| Pencil | Marker | Crayon | Lipstick | Coffee | Grape Juice | Concealer |

The test piece is placed horizontally on a Washability Test Apparatus Cloth Holder, such as Model AG 8100 available from BYK-Gardner, Silver Spring, MD, clipped onto the machine, where the film is washed with a mild soap solution of 1 % JOY Soap for 25 cycles. The panel is rinsed with water and allowed to dry for several hours. The cleaned area is compared to the uncleaned area for a visual rating score according to Table 2 below. This visual scoring method was created through use of Six Sigma Methodology and has been made a certified method of rating. Half scores and quarter scores are used to help distinguish within a given sample set. A value "Combined Stain Ratings for Stains 1-7" is the sum of all 7 rating scores.

**Table 2. Stain Rating Definitions**

| | |
|---|---|
| 0 | worse than blank |
| 1 | same as blank |
| 2 | better than blank |
| 3 | much better than blank |

### EXAMPLES

### Comparative Example A

Paint was tested without any additive compound, according to the test methods above.

### Comparative Example B

A 75-g paint sample was blended with CAPSTONE FS-81 according to the dosing procedure above to form a paint sample of 0.2% by weight of CAPSTONE FS-81. The resulting paint sample was tested according to the test methods above.

### Examples 1-25

Polysciences PMAA is mixed with 20% NaOH solution until a pH of about 9 is reached to form the sodium salt of PMAA. VERSENE 100 XL is mixed with 20% NaOH solution until a pH of about 8 is reached and diluted with water to 25% solids. SILUBE CS-1 is mixed with 20% NaOH solution until a pH of about 7 is reached and diluted with water to 25% solids. SMA 1000 H is mixed with 60% glacial acetic acid until a pH of about 7 is reached and diluted with water to 20% solids.

Amounts of VERSENE 100 XL, SILUBE CS-1, SMA 1000H, and the sodium salt of PMAA were mixed in a vial in the weights (in grams) specified in Table 1. A 75-g paint sample was blended with each additive compound or additive compound mixture according to the dosing procedure above to form a paint sample of 0.5% by solids weight of additive compound. The resulting paint sample was tested according to the test methods above.

**Table 1. Composition (g) for Examples 1-25**

| Example | VERSENE 100 XL | SILUBE CS-1 | SMA 1000 H | Na⁺ Salt of PMAA |
|---|---|---|---|---|
| 1 | 0.00 | 0.00 | 0.00 | 25.00 |
| 2 | 0.00 | 0.00 | 8.33 | 16.67 |
| 3 | 0.00 | 0.00 | 16.67 | 8.33 |
| 4 | 0.00 | 0.00 | 25.00 | 0.00 |
| 5 | 0.00 | 8.33 | 0.00 | 16.67 |
| 6 | 0.00 | 8.33 | 8.33 | 8.33 |
| 7 | 0.00 | 8.33 | 16.67 | 0.00 |
| 8 | 0.00 | 16.67 | 0.00 | 8.33 |
| 9 | 0.00 | 16.67 | 8.33 | 0.00 |
| 10 | 0.00 | 25.00 | 0.00 | 0.00 |
| 11 | 3.13 | 3.13 | 3.13 | 15.63 |
| 12 | 3.13 | 3.13 | 15.63 | 3.13 |
| 13 | 3.13 | 15.63 | 3.13 | 3.13 |
| 14 | 6.25 | 6.25 | 6.25 | 6.25 |
| 15 | 8.33 | 0.00 | 0.00 | 16.67 |
| 16 | 8.33 | 0.00 | 8.33 | 8.33 |
| 17 | 8.33 | 0.00 | 16.67 | 0.00 |
| 18 | 8.33 | 8.33 | 0.00 | 8.33 |
| 19 | 8.33 | 8.33 | 8.33 | 0.00 |
| 20 | 8.33 | 16.67 | 0.00 | 0.00 |
| 21 | 15.63 | 3.13 | 3.13 | 3.13 |
| 22 | 16.67 | 0.00 | 0.00 | 8.33 |
| 23 | 16.67 | 0.00 | 8.33 | 0.00 |
| 24 | 16.67 | 8.33 | 0.00 | 0.00 |
| 25 | 25.00 | 0.00 | 0.00 | 0.00 |

**Table 2. Performance of Examples 1-25**

| | Contact Angle | | Stain Ratings for Stains 1-7 | | | | | | |
|---|---|---|---|---|---|---|---|---|---|
| Ex | H₂O | Oil | 1 | 2 | 3 | 4 | 5 | 6 | 7 |
| A | 76.4 | 0 | 1.0 | 1.0 | 1.0 | 1.0 | 1.0 | 1.0 | 1.0 |
| B | 0 | 83.8 | 2.0 | 1.5 | 1.0 | 2.0 | 2.0 | 1.25 | 1.5 |
| 1 | 48.6 | 0 | 2.5 | 1.75 | 1.5 | 2.25 | 2.5 | 2.5 | 3.0 |
| 2 | 64.7 | 0 | 2.0 | 2.25 | 1.5 | 2.5 | 2.5 | 2.0 | 3.0 |
| 3 | 58.5 | 0 | 2.5 | 2.75 | 1.5 | 2.0 | 2.5 | 3.0 | 2.75 |
| 4 | 62.0 | 0 | 1.5 | 2.5 | 1.0 | 1.0 | 2.0 | 2.5 | 2.0 |
| 5 | 24.3 | 45.4 | 2.75 | 2.0 | 11.5 | 2.5 | 2.5 | 2.0 | 3.0 |
| 6 | 37.1 | 43.6 | 2.5 | 2.0 | 1.5 | 2.5 | 2.5 | 2.5 | 3.0 |
| 7 | 40.1 | 44.4 | 2.75 | 2.0 | 2.0 | 2.5 | 3.0 | 3.0 | 3.0 |
| 8 | 19.2 | 47.6 | 2.0 | 2.0 | 1.0 | 2.5 | 2.5 | 1.75 | 3.0 |
| 9 | 20.2 | 47.5 | 2.25 | 0 | 1.5 | 2.0 | 2.5 | 2.5 | 3.0 |
| 10 | 29.8 | 44.5 | 2.75 | 0 | 1.0 | 2.0 | 2.0 | 2.5 | 2.5 |
| 11 | 35.3 | 45.4 | 3.0 | 2.0 | 1.5 | 2.5 | 2.0 | 2.0 | 3.0 |
| 12 | 25.9 | 45.9 | 2.5 | 2.5 | 1.5 | 2.5 | 3.0 | 2.5 | 3.0 |
| 13 | 36.1 | 44.6 | 2.5 | 1.5 | 1.5 | 2.0 | 2.5 | 1.0 | 3.0 |
| 14 | 24.9 | 48.3 | 2.75 | 2.0 | 1.5 | 2.5 | 2.5 | 2.0 | 3.0 |
| 15 | 44.1 | 0 | 2.75 | 2.5 | 1.5 | 2.75 | 2.0 | 1.75 | 3.0 |
| 16 | 50.2 | 0 | 2.0 | 2.5 | 1.5 | 2.5 | 3.0 | 2.5 | 3.0 |
| 17 | 60.9 | 0 | 1.5 | 2.0 | 1.0 | 1.5 | 2.5 | 1.5 | 2.5 |
| 18 | 20.6 | 46.2 | 2.5 | 2.0 | 1.5 | 2.5 | 2.5 | 0 | 3.0 |
| 19 | 21.9 | 47.9 | 2.5 | 2.25 | 1.5 | 2.5 | 3.0 | 2.5 | 3.0 |
| 20 | 16.6 | 46.8 | 2.75 | 2.5 | 1.0 | 2.5 | 2.5 | 2.0 | 3.0 |
| 21 | 29.8 | 42.3 | 2.75 | 2.75 | 1.5 | 2.75 | 2.5 | 2.0 | 3.0 |
| 22 | 42.6 | 0 | 2.5 | 2.5 | 1.0 | 2.5 | 2.5 | 2.0 | 3.0 |
| 23 | 46.4 | 0 | 2.0 | | 1.5 | 2.5 | 3.0 | 2.0 | 3.0 |
| 24 | 23.7 | 43.3 | 3.0 | 2.75 | 1.5 | 2.5 | 2.5 | 2.0 | 3.0 |
| 25 | 44.5 | 0 | 2.75 | 0 | 1.5 | 2.5 | 2.5 | 1.5 | 3.0 |

### Examples 26-50

Examples 1-25 were repeated, except a 75-g paint sample was blended with each additive compound or additive compound mixture according to the dosing procedure above to form a paint sample of 1.0% by solids weight of additive compound. The resulting paint sample was tested according to the test methods above.

**Table 3. Performance of Examples 26-50**

| | Contact Angle | | Stain Ratings for Stains 1-7 | | | | | | |
|---|---|---|---|---|---|---|---|---|---|
| Ex | H₂O | Oil | 1 | 2 | 3 | 4 | 5 | 6 | 7 |
| A | 76.4 | 0 | 1.0 | 1.0 | 1.0 | 1.0 | 1.0 | 1.0 | 1.0 |
| B | 0 | 83.8 | 2.0 | 1.5 | 1.0 | 2.0 | 2.0 | 1.25 | 1.5 |
| 26 | 59.7 | 0 | 1.75 | 2.0 | 1.5 | 2.5 | 2.5 | 2.25 | 2.25 |
| 27 | 63.9 | 0 | 2.25 | 2.0 | 1.5 | 2.0 | 2.5 | 2.5 | 3.0 |
| 28 | 59.1 | 0 | 2.0 | 2.75 | 1.0 | 1.0 | 2.5 | 2.75 | 2.25 |
| 29 | 77.7 | 0 | 2.0 | 2.5 | 1.5 | 1.0 | 2.5 | 2.5 | 2.5 |
| 30 | 43.8 | 41 | 2.5 | 2.5 | 1.5 | 2.5 | 2.5 | 2.0 | 3.0 |
| 31 | 42.1 | 42.9 | 2.25 | 2.0 | 1.0 | 2.25 | 3.0 | 2.5 | 3.0 |
| 32 | 27.9 | 45.4 | 2.75 | 2.0 | 1.5 | 2.75 | 3.0 | 2.5 | 3.0 |
| 33 | 40.2 | 44.2 | 2.5 | 1.5 | 1.5 | 2.5 | 2.5 | 2.5 | 2.5 |
| 34 | 40.5 | 42 | 2.0 | 1.5 | 1.5 | 2.0 | 3.0 | 2.5 | 2.0 |
| 35 | 36.2 | 44.3 | 2.75 | 1.5 | 1.5 | 2.0 | 2.5 | 2.0 | 2.75 |
| 36 | 30.2 | 43 | 2.5 | 2.5 | 1.5 | 2.75 | 3.0 | 2.0 | 3.0 |
| 37 | 28.6 | 41.4 | 2.25 | 2.0 | 1.5 | 2.5 | 3.0 | 2.0 | 3.0 |
| 38 | 52.6 | 44 | 2.0 | 1.5 | 1.0 | 2.25 | 3.0 | 2.5 | 3.0 |
| 39 | 41.7 | 42.2 | 2.0 | 2.0 | 1.5 | 2.0 | 3.0 | 2.5 | 3.0 |
| 40 | 67.0 | 0 | 1.5 | 2.0 | 1.0 | 1.0 | 3.0 | 1.5 | 2.0 |
| 41 | 70.5 | 0 | 1.5 | 2.5 | 1.5 | 1.5 | 2.5 | 2.0 | 2.5 |
| 42 | 56.8 | 0 | 1.5 | 1.0 | 1.5 | 1.0 | 2.5 | 2.25 | 2.5 |
| 43 | 40.1 | 43 | 1.5 | 1.5 | 1.5 | 2.5 | 2.5 | 0 | 2.5 |
| 44 | 44.5 | 42.7 | 2.25 | 1.5 | 1.0 | 2.25 | 2.5 | 2.5 | 3.0 |
| 45 | 37.9 | 45.5 | 2.0 | 1.5 | 1.5 | 2.0 | 2.75 | 2.0 | 3.0 |
| 46 | 27.9 | 43.3 | 2.0 | 0 | 1.5 | 2.5 | 2.5 | 1.5 | 3.0 |
| 47 | 56.8 | 0 | 1.75 | 2.0 | 1.0 | 1.0 | 2.5 | 2.0 | 2.0 |
| 48 | 58.5 | 0 | 2.0 | 2.0 | 1.0 | 1.5 | 2.5 | 2.5 | 2.0 |
| 49 | 22.4 | 43.7 | 2.5 | 2.0 | 1.5 | 2.5 | 3.0 | 2.0 | 3.0 |
| 50 | 54.7 | 0 | 1.75 | 0 | 1.0 | 2.0 | 2.5 | 2.0 | 2.25 |

### Examples 51-57

CARBOSPERSE K-765 (K-765) is mixed with NaOH to reduce the pH to 7 and diluted with water to 10% solids. VERSENE 100 XL is mixed with 20% NaOH solution until a pH of about 8 is reached and diluted with water to 25% solids. SILUBE CS-1 is mixed with 20% NaOH solution until a pH of about 7 is reached and diluted with water to 25% solids. SMA 1000 H is mixed with 60% glacial acetic acid until a pH of about 7 is reached and diluted with water to 20% solids.

Amounts of VERSENE 100 XL, SILUBE CS-1, SILSURF D212-CG, SMA 1000H, the salts of PMAA were mixed in a vial in the weight percentages specified in Table 4. A 75-g paint sample was blended with each additive compound or additive compound mixture according to the dosing procedure above to form a paint sample of 0.75% by solids weight of additive compound. The resulting paint sample was tested according to the test methods above.

**Table 4. Composition (total weight %) of Examples 51-57**

| Ex | VERSENE 100 XL | SILUBE CS-1 | SILSURF D212-CG | SMA 1000 H | Na⁺ Salt of K-765 |
|---|---|---|---|---|---|
| 51 | 49 | 51 | 0 | 0 | 0 |
| 52 | 28 | 30 | 0 | 42 | 0 |
| 53 | 0 | 28 | 0 | 72 | 0 |
| 54 | 0 | 0 | 0 | 37 | 63 |
| 55 | 0 | 16 | 0 | 46 | 38 |
| 56 | 0 | 10 | 0 | 26 | 64 |
| 57 | 0 | 0 | 28 | 72 | 0 |

### Examples 58

A methacrylic acid homopolymer was synthesized in water via redox catalysis. Water (181 g), methacrylic acid (99%, 20 g), and sodium hydroxide solution (5N, 12.88 g) were stirred while heating to 68 °C under nitrogen. Once the reaction mixture reached 68 °C, sodium persulfate (0.443 g) in water (8.36 g) was added followed by ferrous sulfate (0.013 g) in water (8.36 g). The reaction was held at 68 °C for 5 hours. The reaction was cooled to room temperature and sodium hydroxide solution (Fisher, 5N, 38.63 g) was added. The resulting polymer had a pH of 7 and a molecular weight Mₙ = 49,100 Da and M_{w} = 177,000 Da.

SMA 1000 H is mixed with 60% glacial acetic acid until a pH of about 7 is reached. Amounts of the sodium salt of polymethacrylic acid solution (37% by total weight) and SMA 1000H (63% by total weight) were mixed in a vial. A 75-g paint sample was blended with the resulting additive compound mixture according to the dosing procedure above to form a paint sample of 0.75% by solids weight of additive compound. The resulting paint sample was tested according to the test methods above.

### Examples 59

Example 58 was repeated, except 2-amino-2-methyl-1-propanol (5.18 g pre-initiation, 15.53 g post-polymerization) was used in place of sodiuim hydroxide. The resulting polymer had a pH of 7 and a molecular weight Mₙ = 45,400 Da and M_{w} = 150,000 Da.

### Examples 60

Example 58 was repeated, except L-lysine (8.49 g pre-initiation, 25.47 g post-polymerization) was used in place of sodiuim hydroxide. The resulting polymer had a pH of 7 and a molecular weight Mₙ = 41,600 Da and M_{w} = 93,700 Da.

**Table 5. Performance of Examples 51-60**

| | Contact Angle | | Stain Ratings for Stains 1-7 | | | | | | |
|---|---|---|---|---|---|---|---|---|---|
| Ex | H₂O | Oil | 1 | 2 | 3 | 4 | 5 | 6 | 7 |
| 51 | 0.0 | 45.2 | 2.0 | 1.0 | 2.5 | 2.5 | 3.0 | 3.0 | 2.75 |
| 52 | 18.2 | 45.2 | 2.0 | 1.0 | 3.0 | 2.5 | 3.0 | 3.0 | 3.0 |
| 53 | 29.1 | 44.6 | 1.75 | 1.0 | 2.5 | 2.5 | 3.0 | 1.75 | 3.0 |
| 54 | 62.4 | 0.0 | 2.0 | 1.0 | 2.5 | 1.5 | 3.0 | 2.5 | 2.25 |
| 55 | 26.7 | 42.6 | 2.0 | 1.0 | 2.0 | 2.5 | 3.0 | 2.75 | 2.75 |
| 56 | 26.7 | 42.6 | 2.5 | 1.0 | 2.0 | 2.5 | 3.0 | 2.5 | 2.75 |
| 57 | 0.0 | 43.3 | 2.5 | 1.0 | 2.5 | 2.5 | 3.0 | 3.0 | 2.25 |
| 58 | 60.9 | 0.0 | 2.0 | 1.0 | 2.0 | 2.0 | 3.0 | 2.0 | 2.0 |
| 59 | 65.5 | 0.0 | 1.5 | 1.0 | 2.75 | 2.0 | 3.0 | 2.0 | 2.0 |
| 60 | 61.6 | 0.0 | 1.75 | 1.0 | 2.75 | 1.75 | 3.0 | 3.0 | 2.5 |

### Examples 61-64

*N,N*-Bis-(carboxymethyl)-L-glutamate (TSCMG), BAYPURE CX-100, BAYPURE DS-100, and DISSOLVINE GL-47-S were mixed with 60% glacial acetic acid until a pH of about 7.5-8 was reached. SILUBE CS-1 was mixed with 20% NaOH solution until a pH of about 7 is reached and diluted with water to 25% solids. SMA 1000 H is mixed with 60% glacial acetic acid until a pH of about 7 is reached and diluted with water to 20% solids.

Amounts of *N,N*-Bis-(carboxymethyl)-L-glutamate (TSCMG), BAYPURE CX-100, BAYPURE DS-100, DISSOLVINE GL-47-S, SILUBE CS-1, and SMA 1000 H were mixed in a vial in the weight percentages specified in Table 6. A 75-g paint sample was blended with each additive compound or additive compound mixture according to the dosing procedure above to form a paint sample of 0.75% by solids weight of additive compound. The resulting paint sample was tested according to the test methods above.

**Table 6. Composition (total weight %) of Examples 61-64**

| Ex | SILUBE CS-1 | TSCMG | BAYPURE CX-100 | BAYPURE DS-100 | DISSOLVINE GL-47-S | SMA 1000 H |
|---|---|---|---|---|---|---|
| 61 | 30 | 28 | 0 | 0 | 0 | 42 |
| 62 | 30 | 0 | 28 | 0 | 0 | 42 |
| 63 | 30 | 0 | 0 | 28 | 0 | 42 |
| 64 | 30 | 0 | 0 | 0 | 28 | 42 |

**Table 7. Performance of Examples 61-64**

| | Contact Angle | | Stain Ratings for Stains 1-7 | | | | | | |
|---|---|---|---|---|---|---|---|---|---|
| Ex | H₂O | Oil | 1 | 2 | 3 | 4 | 5 | 6 | 7 |
| 61 | 0.0 | 82.8 | 1.75 | 2.5 | 1.0 | 2.5 | 3.0 | 2.5 | 2.5 |
| 62 | 0.0 | 44.4 | 1.5 | 2.0 | 1.5 | 2.25 | 3.0 | 2.0 | 2.5 |
| 63 | 0.0 | 45.0 | 1.75 | 1.75 | 1.0 | 2.5 | 3.0 | 2.5 | 2.5 |
| 64 | 0.0 | 45.4 | 1.5 | 1.0 | 1.0 | 2.5 | 3.0 | 2.5 | 3.0 |

### Examples 65-69

AQUATREAT AR4 (AR4), AQUATREAT AR6 (AR6), Polysciences PMAA (PMAA), and AQUATREAT AR235 (AR235) were separately mixed with 20% NaOH solution until a pH of about 7.5-8 was reached to form the sodium salt of AQUATREAT AR4, AQUATREAT AR6, Polysciences PMAA, and AQUATREAT AR235, respectively. AQUATREAT AR7H (AR7H) was mixed with 20% NaOH solution until a pH of about 10.5 was reached to form the sodium salt of AQUATREAT AR7H. SMA 1000 H was mixed with 60% glacial acetic acid until a pH of about 7 was reached and diluted with water to 20% solids.

Amounts of SMA 1000H and the sodium salt of PMAA or PAA were mixed in a vial in the weight percentages specified in Table 8. A 75-g paint sample was blended with each additive compound or additive compound mixture according to the dosing procedure above to form a paint sample of 0.75% by solids weight of additive compound. The resulting paint sample was tested according to the test methods above.

**Table 8. Composition (total weight %) of Examples 65-69**

| Ex | SMA 1000 H | Na⁺ Salt of AR4 | Na⁺ Salt of AR6 | Na⁺ Salt of AR7H | Na⁺ Salt of AR235 | Na⁺ Salt of PMAA |
|---|---|---|---|---|---|---|
| 65 | 37 | 63 | 0 | 0 | 0 | 0 |
| 66 | 37 | 0 | 63 | 0 | 0 | 0 |
| 67 | 37 | 0 | 0 | 0 | 0 | 63 |
| 68 | 37 | 0 | 0 | 0 | 63 | 0 |
| 69 | 37 | 0 | 0 | 63 | 0 | 0 |

**Table 9. Performance of Examples 65-69**

| | Contact Angle | | Stain Ratings for Stains 1-7 | | | | | | |
|---|---|---|---|---|---|---|---|---|---|
| Ex | H₂O | Oil | 1 | 2 | 3 | 4 | 5 | 6 | 7 |
| 65 | 64.6 | 0.0 | 1.5 | 2.5 | 1.0 | 1.5 | 3.0 | 2.5 | 1.5 |
| 66 | 65.1 | 0.0 | 1.75 | 2.5 | 1.5 | 1.5 | 2.5 | 2.5 | 1.75 |
| 67 | 64.1 | 0.0 | 1.5 | 2.0 | 1.0 | 1.75 | 2.5 | 2.5 | 2.0 |
| 68 | 59.0 | 0.0 | 1.5 | 2.0 | 1.0 | 1.75 | 3.0 | 2.0 | 1.5 |
| 69 | 64.7 | 0.0 | 1.75 | 1.75 | 1.0 | 1.5 | 2.0 | 1.5 | 1.0 |

### Examples 70-73

AQUATREAT AR6 (AR6) is mixed with 20% aqueous sodium hydroxide to reach a pH of 7.8. Amounts of DISSOLVINE GL-47-S, SILSURF D212, SMA 1000H (20% solids), the sodium salt of AR6 were mixed in a vial in the weight percentages specified in Table 10. A 75-g paint sample was blended with each additive compound or additive compound mixture according to the dosing procedure above to form a paint sample of 0.75% by solids weight of additive compound. The resulting paint sample was tested according to the test methods above.

**Table 10. Composition (total weight %) of Examples 70-73**

| Ex | DISSOLVINE GL-47-S | SILUBE CS-1 | SILSURF D212-CG | SMA 1000 H | Na⁺ Salt of AR6 |
|---|---|---|---|---|---|
| 70 | 49 | 51 | 0 | 0 | 0 |
| 71 | 28 | 0 | 30 | 42 | 0 |
| 72 | 0 | 0 | 16 | 46 | 38 |
| 73 | 0 | 0 | 10 | 26 | 64 |

**Table 11. Performance of Examples 70-73**

| | Contact Angle | | Stain Ratings for Stains 1-7 | | | | | | |
|---|---|---|---|---|---|---|---|---|---|
| Ex | H₂O | Oil | 1 | 2 | 3 | 4 | 5 | 6 | 7 |
| 70 | 16.1 | 45.5 | 1.75 | 2.5 | 1.0 | 2.5 | 3.0 | 2.5 | 2.5 |
| 71 | 0.0 | 45.8 | 1.5 | 2.0 | 1.5 | 2.25 | 3.0 | 2.0 | 2.5 |
| 72 | 0.0 | 44.8 | 1.5 | 2.5 | 1.0 | 1.5 | 3.0 | 2.5 | 1.5 |
| 73 | 0.0 | 43.7 | 1.75 | 2.5 | 1.5 | 1.5 | 2.5 | 2.5 | 1.75 |

### Example 74

SILSURF D212 CG (100%, 5 g), water (15 g), and DISSOLVINE GL-47-S (25%, 19.2 g) were mixed in a vessel. Glacial acetic acid (60%) was added to lower the pH to 9.4, and the resulting solution was diluted with water (12 g). A 75-g paint sample was blended with the additive compound mixture according to the dosing procedure above to form a paint sample of 0.75% by solids weight of additive compound. The resulting paint sample was tested according to the test methods above.

### Example 75

SILSURF D212 CG, water, DISSOLVINE GL-47-S, and AQUATREAT AR6 were mixed in a vessel to form a solution at 32.7% by solids weight SILSURF D212 CG, 30.6% by solids weight DISSOLVINE GL-47-S, and 36.7% by solids weight AQUATREAT AR6. The solution had a pH of 8.9 and was 25.6% solids. A 75-g paint sample was blended with the additive compound mixture according to the dosing procedure above to form a paint sample of 0.75% by solids weight of additive compound. The resulting paint sample was tested according to the test methods above.

### Example 76

SILSURF D212 CG, water, and AQUATREAT AR6 were mixed in a vessel to form a solution at 32.7% by solids weight SILSURF D212 CG, and 67.3% by solids weight AQUATREAT AR6. The solution had a pH of 8.5 and was 19.5% solids. A 75-g paint sample was blended with the additive compound mixture according to the dosing procedure above to form a paint sample of 0.75% by solids weight of additive compound. The resulting paint sample was tested according to the test methods above.

### Example 77

SILUBE CS-1, water, and SMA 1000 H were mixed in a vessel to form a solution at 33.3% by solids weight SILUBE CS-1 and 66.6% by solids weight SMA 1000 H. Sodium hydroxide solution (10N) was added to lower the pH to 8.6, and the resulting solution was at 21.5% solids. A 75-g paint sample was blended with the additive compound mixture according to the dosing procedure above to form a paint sample of 0.75% by solids weight of additive compound. The resulting paint sample was tested according to the test methods above.

### Example 78

Example 77 was repeated, except SILSURF D212 CG was used in place of SILUBE CS-1.

### Example 79

AQUATREAT AR6, water, and SMA 1000 H were mixed in a vessel to form a solution at 46.0% by solids weight AQUATREAT AR6 and 54.0% by solids weight SMA 1000 H. The solution had a pH to 9.7 and was at 19.5% solids. A 75-g paint sample was blended with the additive compound mixture according to the dosing procedure above to form a paint sample of 0.5% by solids weight of additive compound. The resulting paint sample was tested according to the test methods above.

### Example 80

Example 79 was repeated, except the additive compound mixture was dosed into the paint sample 0.25% by solids weight of additive compound.

### Example 81

SILSURF D212 CG, AQUATREAT AR6, water, and SMA 1000 H were mixed in a vessel to form a solution at 23.5% by solids weight SILSURF D212 CG, 22.4% by solids weight AQUATREAT AR6 and 54.1 % by solids weight SMA 1000 H. The solution had a pH to 10.3 and was at 16.8% solids. A 75-g paint sample was blended with the additive compound mixture according to the dosing procedure above to form a paint sample of 0.75% by solids weight of additive compound. The resulting paint sample was tested according to the test methods above.

### Example 82

Example 81 was repeated, except the additive compound mixture was dosed into the paint sample 0.25% by solids weight of additive compound.

### Example 83

Example 80 was repeated to form a solution at 17.7% by solids weight SILSURF D212 CG, 45.4% by solids weight AQUATREAT AR6 and 36.9% by solids weight SMA 1000 H. The solution had a pH to 9.5 and was at 13.2% solids.

**Table 12. Performance of Examples 74-83**

| | Contact Angle | | Stain Ratings for Stains 1-7 | | | | | | |
|---|---|---|---|---|---|---|---|---|---|
| Ex | H₂O | Oil | 1 | 2 | 3 | 4 | 5 | 6 | 7 |
| 74 | 29.6 | 42.9 | 1.5 | 2.0 | 1.0 | 1.0 | 2.5 | 2.5 | 1.5 |
| 75 | 36.0 | 45.0 | 1.75 | 2.0 | 1.0 | 1.0 | 2.75 | 2.0 | 1.75 |
| 76 | 50.6 | 44.0 | 1.75 | 2.75 | 1.5 | 1.5 | 3.0 | 2.0 | 1.75 |
| 77 | 52.4 | 41.0 | 1.75 | 2.0 | 1.0 | 1.5 | 2.5 | 2.75 | 1.75 |
| 78 | 55.9 | 44.1 | 1.5 | 2.0 | 1.0 | 1.5 | 2.5 | 2.75 | 2.0 |
| 79 | 78.7 | 0.0 | 1.0 | 2.0 | 1.0 | 1.0 | 2.5 | 2.0 | 1.75 |
| 80 | 83.1 | 0.0 | 1.5 | 0 | 1.0 | 1.0 | 2.0 | 2.0 | 1.75 |
| 81 | 44.8 | 42.1 | 1.5 | 2.25 | 1.0 | 1.5 | 2.0 | 1.75 | 2.0 |
| 82 | 51.4 | 38.8 | 1.0 | 2.5 | 1.0 | 1.5 | 2.0 | 1.75 | 2.0 |
| 83 | 16.4 | 39.2 | 1.5 | 2.75 | 1.5 | 1.5 | 2.5 | 2.5 | 2.25 |

### Example 84

A methacrylic acid homopolymer was synthesized in water via redox catalysis. Water (188 g), methacrylic acid (99%, 20 g), and sodium hydroxide (3.1 g) in water (7.0 g) were stirred while heating to 68 °C under nitrogen. Once the reaction mixture reached 68 °C, sodium persulfate (0.443 g) in water (8.36 g) was added followed by ferrous sulfate (0.013 g) in water (8.36 g). The reaction was held at 68 °C for 4 hours. The reaction was cooled to room temperature and sodium hydroxide solution (6.2 g) in water (13.9 g) was added. The final polymer had a molecular weight Mₙ of 35,200 Da and M_{w} of 112,000 Da. A 75-g paint sample was blended with the additive compound according to the dosing procedure above to form a paint sample of 1 % by solids weight of additive compound. The resulting paint sample was tested according to the test methods above.

### Example 85

Example 84 was repeated, except the paint was additionally dosed with 0.035% by solids weight of CAPSTONE FS-61.

### Example 86

Example 84 was repeated, except the paint was additionally dosed with 0.2% by solids weight of CAPSTONE FS-81.

### Example 87

Example 84 was repeated, except the paint was additionally dosed with 0.2% by solids weight of CAPSTONE FS-87.

### Example 88

Example 84 was repeated, except the paint was additionally dosed with 0.035% by solids weight of CAPSTONE FS-50.

### Example 89

A poly(methacrylic acid) sodium salt solution (Sigma Aldrich, pH 8-9, Mₙ 5,400, M_{w} 8,500) was dosed into a 75-g paint sample according to the dosing procedure above such that the final mixture contained 1 % by solids weight of poly(methacrylic acid) sodium salt. The resulting paint sample was tested according to the test methods above.

### Example 90

A poly(methacrylic acid) sodium salt solution (Sigma Aldrich, M_{w} 4,000-6,000) was dosed into a 75-g paint sample according to the dosing procedure above such that the final mixture contained 1% by solids weight of poly(methacrylic acid) sodium salt. The resulting paint sample was tested according to the test methods above.

**Table 13. Performance of Examples 84-90**

| | Contact Angle | | Stain Ratings for Stains 1-7 | | | | | | |
|---|---|---|---|---|---|---|---|---|---|
| Ex | H₂O | Oil | 1 | 2 | 3 | 4 | 5 | 6 | 7 |
| 84 | 61.4 | 0.0 | 1.5 | 1.0 | 1.5 | 1.5 | 1.5 | 1.5 | 1.5 |
| 85 | 66.8 | 94.2 | 0 | 1.0 | 1.5 | 2.0 | 2.0 | 1.5 | 0 |
| 86 | 0.0 | 95.3 | 2.5 | 1.0 | 2.0 | 2.5 | 2.0 | 1.5 | 2.5 |
| 87 | 21.5 | 63.0 | 2.0 | 1.0 | 2.0 | 2.5-3 | 1.5 | 1.5 | 2.0 |
| 88 | 0.0 | 75.1 | 2.0 | 1.0 | 1.5 | 2.5-3 | 0 | 1.5 | 2.0 |
| 89 | 60.4 | 0.0 | 1 | 1 | 1.5 | 1 | 0 | 1 | 1 |
| 90 | 59.9 | 0.0 | 1 | 1 | 1.5 | 1 | 0 | 1 | 1 |

### Examples 91-94 and Comparative Example C

ZELAN 8719, SILUBE CS-1, SILSURF D212-CG, SMA 1000 H, and STRODEX PK-OVOC were mixed together in amounts specified in Table 14. The mixture was dosed into a 75-g paint sample according to the dosing procedure such that the final mixture contained 0.5% by solids weight of the mixture. The resulting paint sample was tested according to the test methods above.

**Table 14. Composition (total solids weight %) of Examples 91-94 and Comparative Example C**

| Ex | ZELAN 8719 | SILUBE CS-1 | SILSURF D212-CG | SMA 1000 H | STRODEX PK-OVOC |
|---|---|---|---|---|---|
| C | 100 | 0 | 0 | 0 | 0 |
| 91 | 65 | 0 | 35 | 0 | 0 |
| 92 | 65 | 35 | 0 | 0 | 0 |
| 93 | 43 | 0 | 23 | 0 | 33 |
| 94 | 43 | 23 | 0 | 0 | 33 |

### Examples 95-98

ZELAN 8719, SILSURF DI-1010, SILSURF D212-CG, SMA 1000 H, and SMA 1000 HK were mixed together in amounts specified in Table 15. The mixture was dosed into a 75-g paint sample according to the dosing procedure such that the final mixture contained 0.5% by solids weight of the mixture. The resulting paint sample was tested according to the test methods above.

**Table 15. Composition (total solids weight %) of Examples 95-98**

| Ex | ZELAN 8719 | SILSURF DI-1010 | SILSURF D212-CG | SMA 1000 H | SMA 1000 HK |
|---|---|---|---|---|---|
| 95 | 65 | 35 | 0 | 0 | 0 |
| 96 | 33 | 0 | 33 | 33 | 0 |
| 97 | 0 | 0 | 0 | 0 | 100 |
| 98 | 0 | 0 | 35 | 0 | 65 |

### Examples 99-104

SILSURF D212 (159.3 g), water (38 g), and SMA 1000H (802.7 g) were stirred at room temperature for 1 hour. To form an STS-30 mixture, STS-30 (60 g) was melted in methyl isobutyl ketone (150 g). DOWFAX 2A1 (2 g) and water (163 g) were then added, and the mixture was stirred at 65 °C for 30 minutes. The mixture was then homogenized 4 times at 6000 psi and distilled to remove the organic solvent. The SILSURF/SMA 1000 H mixture was combined with STRODEX PK-OVOC, ZELAN CA-72, or STS-30 mixture and mixed together in the amounts specified in Table 16. The mixture was dosed into a 75-g paint sample according to the dosing procedure such that the final mixture contained 0.5% by solids weight of the mixture. The resulting paint sample was tested according to the test methods above.

**Table 16. Composition (total weight %) of Examples 99-104**

| Ex | SILSURF D212 / SMA 1000 H mix | STRODEX PK-OVOC | ZELAN CA-72 | STS-30 mix |
|---|---|---|---|---|
| 99 | 85 | 15 | 0 | 0 |
| 100 | 75 | 25 | 0 | 0 |
| 101 | 75 | 0 | 25 | 0 |
| 102 | 50 | 0 | 50 | 0 |
| 103 | 75 | 0 | 0 | 25 |
| 104 | 50 | 0 | 0 | 50 |

**Table 17. Performance of Examples 91-104 and Comparative Example C**

| Ex | H₂O Contact Angle | Oil Contact Angle | Combined Stain Ratings for Stains 1-7 |
|---|---|---|---|
| C | 52.5 | 0 | 13.5 |
| 91 | 0 | 37.5 | 13.75 |
| 92 | 29.3 | 38.4 | 11 |
| 93 | 26.1 | 38.1 | 14 |
| 94 | 37.7 | 45.0 | 12.5 |
| 95 | 0 | 38.3 | 11.25 |
| 96 | 0 | 36.0 | 13.75 |
| 97 | 48.0 | 0 | 11.75 |
| 98 | 0.0 | 36.5 | 12.5 |
| 99 | 55.4 | 37.83 | 14.25 |
| 100 | 61.6 | 38.7 | 13.25 |
| 101 | 46.1 | 38.77 | 15.5 |
| 102 | 51.0 | 36.78 | 14.25 |
| 103 | 54.1 | 37.93 | 14.5 |
| 104 | 66.6 | 37.93 | 13.75 |

### Examples 105-109

SILSURF D212 (159.3 g), water (38 g), and SMA 1000H (802.7 g) were stirred at room temperature for 1 hour. The SILSURF D212/SMA 1000 H mixture was combined in a 50:50 solids weight ratio with STRODEX PK-80N (105), STRODEX KM-0VOC (106), STRODEX PK-85NV (107), STRODEX KM-400LV (108), or STRODEX PK-OVOC (109) and mixed together. The mixture was dosed into a 75-g paint sample according to the dosing procedure such that the final mixture contained 0.5% by solids weight of the mixture. The resulting paint sample was tested according to the test methods above.

### Examples 110-113

SILSURF D212 (159.3 g), water (38 g), and SMA 1000H (802.7 g) were stirred at room temperature for 1 hour. The SILSURF D212/SMA 1000 H mixture was combined with STRODEX PK-OVOC and mixed together in the amounts specified in Table 17. The mixture was dosed into a 75-g paint sample according to the dosing procedure such that the final mixture contained 0.5% by solids weight of the mixture. The resulting paint sample was tested according to the test methods above.

**Table 17. Composition (total solids weight %) of Examples 95-98**

| Ex | SILSURF D212 / SMA 1000 H mix | STRODEX PK-OVOC |
|---|---|---|
| 110 | 10 | 90 |
| 111 | 33 | 66 |
| 112 | 66 | 33 |
| 113 | 90 | 10 |

### Example 114

SILSURF D212 was combined with STRODEX PK-OVOC in a ratio of 35:65 by solids weight and mixed together. The mixture was dosed into a 75-g paint sample according to the dosing procedure such that the final mixture contained 0.5% by solids weight of the mixture. The resulting paint sample was tested according to the test methods above.

### Examples 115-121

SMA 1000H was combined in a 50:50 solids weight ratio with SILSURF DI-1017 (115), SILSURF J208 (116), SILSURF J208-412 (117), SILSURF A008-UP (118), SILSURF 1108 (119), SILSURF E608 (120), or SILSURF C410 (121), and mixed together. The mixture was dosed into a 75-g paint sample according to the dosing procedure such that the final mixture contained 0.5% by solids weight of the mixture. The resulting paint sample was tested according to the test methods above.

### Examples 122-123

SILSURF D212 was combined with SMA 2000 H (122) or SMA 3000 H (123) in a ratio of 33:66 by solids weight and mixed together. The mixture was dosed into a 75-g paint sample according to the dosing procedure such that the final mixture contained 0.5% by solids weight of the mixture. The resulting paint sample was tested according to the test methods above.

**Table 18. Performance of Examples 105-123**

| Ex | H₂O Contact Angle | Oil Contact Angle | Combined Stain Ratings for Stains 1-7 |
|---|---|---|---|
| 105 | 69.60 | 38.7 | 12 |
| 106 | 60.50 | 39.9 | 14.5 |
| 107 | 63.20 | 37.6 | 13.5 |
| 108 | 27.80 | 38.8 | 13.5 |
| 109 | 64.60 | 38.1 | 15 |
| 110 | 55.6 | 30.9 | 15 |
| 111 | 60.4 | 37.9 | 15 |
| 112 | 64.1 | 39.5 | 15.5 |
| 113 | 29.6 | 39.9 | 16.5 |
| 114 | 31.9 | 38 | 15.75 |
| 115 | 27.7 | 40.9 | 15.5 |
| 116 | 27.8 | 37.4 | 16.5 |
| 117 | 40.6 | 26.7 | 15.75 |
| 118 | 45.4 | 0 | 16 |
| 119 | 55.6 | 0 | 14.75 |
| 120 | 44.8 | 40.5 | 15.5 |
| 121 | 0 | 40.1 | 15.75 |
| 122 | 14.5 | 0 | 39 |
| 123 | 14.25 | 23.9 | 38.3 |

### Example 124

SILSURF D212-CG was combined with SMA 1000 H in a ratio of 33:66 by solids weight and mixed together to form a mixture at 25% solids by weight and a pH of 8.9. The mixture was blended in a ratio of 90:10 by solids weight with ZELAN CA-72. The mixture was dosed into a 75-g paint sample according to the dosing procedure such that the final mixture contained 1 % by solids weight of the mixture. The resulting paint sample was tested according to the test methods above.

### Example 125

A stain release composition was then synthesized. Into a 4-neck round bottom flask equipped with an overhead stirrer, thermocouple and condenser was added DESMODUR N100 (135 g), MPEG 750 (378 g), sodium carbonate (3.1 g) and catalyst. The mixture was heated to 80 °C. After 1 hour, sorbitan tristearate (161 g) was added and heated to 95 °C until no active isocyanates were present. Water (2357 g) and acetic acid (4.4 g) were added to a beaker and stirred to form a solution. The solution was heated to 65 °C. The mixture was immersion blended and homogenized at 6000 psi. The resulting urethane dispersion was at 20.54% solids after cooling and filtering.

SILSURF D212-CG was combined with SMA 1000 H in a ratio of 33:66 by solids weight and mixed together to form a mixture at 25% solids by weight and a pH of 8.9. The mixture was blended in a ratio of 90:10 by solids weight with the stain release composition. The mixture was dosed into a 75-g paint sample according to the dosing procedure such that the final mixture contained 1% by solids weight of the mixture. The resulting paint sample was tested according to the test methods above.

### Example 126

A stain release composition was then synthesized. MPEG 750 (14.77 g), SILSURF D212 (11.95 g), sodium carbonate (0.35 g), DESMODUR N100 (15 g), 0.5% FeCl₃ in methyl isobutyl ketone (MIBK) (0.96 g) and MIBK (221 g) were heated to 80 °C. After 1 hour, STS-30 (29.73 g) was added. An additional 1 g of water and FeCl₃ were added, and the mixture was stirred until no active isocyanates were present. ARMEEN DM 18D (2.7 g), acetic acid (2.0 g) and water (300 g) were added. The mixture was homogenized twice at 6000 psi, and the solvent was removed via distillation.

SILSURF D212-CG was combined with SMA 1000 H in a ratio of 33:66 by solids weight and mixed together to form a mixture at 25% solids by weight and a pH of 8.9. The mixture was blended in a ratio of 90:10 by solids weight with the stain release composition. The mixture was dosed into a 75-g paint sample according to the dosing procedure such that the final mixture contained 1 % by solids weight of the mixture. The resulting paint sample was tested according to the test methods above.

### Example 127

Example 126 was repeated, using SILSURF Di-1017 (25.23 g) instead of SILSURF D212-CG.

### Examples 128-129

Example 124 was repeated, using STS-30 (128) or CAPSTONE TR (129) instead of ZELAN CA-72.

**Table 19. Performance of Examples 124-129**

| Ex | Oil Contact Angle |
|---|---|
| 124 | 40.9 |
| 125 | 39.9 |
| 126 | 39.7 |
| 127 | 41.4 |
| 128 | 39.0 |
| 129 | 50.1 |

### Example 130

SILUBE CS-1 was combined with SMA 1000 H in a ratio of 33:66 by solids weight and neutralized with ammonium hydroxide to form a mixture at 25% solids by weight and a pH of 8.6. The mixture was dosed into a 75-g paint sample according to the dosing procedure such that the final mixture contained 1 % by solids weight of the mixture. The resulting paint sample was tested according to the test methods above.

### Example 131

SILSURF D212-CG was combined with SMA 1000 H in a ratio of 33:66 by solids weight and mixed together by mechanical stirring to form a mixture at 45% solids by weight. The mixture was dosed into a 75-g paint sample according to the dosing procedure such that the final mixture contained 1 % by solids weight of the mixture. The resulting paint sample was tested according to the test methods above.

### Example 132

Example 130 was repeated, without the addition of ammonium hydroxide, to form a mixture at 40% solids.

### Example 133

Example 132 was repeated, using the ratio of 42:58 by solids weight.

### Examples 134-136

Examples 131-133 were repeated, except the mixture was dosed into a 75-g paint sample according to the dosing procedure such that the final mixture contained 0.5% by solids weight of the mixture.

### Example 137

SILUBE CS-1 was neutralized with sodium hydroxide to form a mixture at 25% solids by weight and a pH of 7. The mixture was dosed into a 75-g paint sample according to the dosing procedure such that the final mixture contained 0.01 % by solids weight of the mixture. The resulting paint sample was tested according to the test methods above.

### Example 138

Example 137 was repeated, except the mixture was dosed into a 75-g paint sample according to the dosing procedure such that the final mixture contained 0.75% by solids weight of the mixture.

**Table 20. Performance of Examples 130-138**

| Ex | H₂O Contact Angle | Oil Contact Angle | Combined Stain Ratings for Stains 1-7 |
|---|---|---|---|
| 130 | 52.5 | 37.2 | 16 |
| 131 | 53.5 | 44 | 12 |
| 132 | 55.7 | 35.3 | 16 |
| 133 | 57.1 | 35.7 | 15 |
| 134 | 62.3 | 37.2 | 12 |
| 135 | 62.8 | 19.4 | 13.5 |
| 136 | 66 | 25.9 | 12.5 |
| 137 | 38.2 | 39.2 | 14.5 |
| 138 | 47.2 | 40.1 | 14 |

## Claims

1. A coating composition comprising a coating base and 0.1 to 10% by weight of an additive compound, based on the total solids weight of the coating,
where the additive compound is at least one of an alkali metal salt of poly(meth)acrylic acid, ammonium compound or amine salt of poly(meth)acrylic acid, silicone polyether, alkali metal salt of silicone polyether carboxylate, ammonium compound or amine salt of silicone polyether carboxylate, alkali metal salt of hydrolyzed α-olefin/maleic anhydride copolymer, ammonium compound or amine salt of hydrolyzed α-olefin/maleic anhydride copolymer, alkali metal salt of esterified α-olefin/maleic anhydride copolymer, ammonium compound or amine salt of esterified α-olefin/maleic anhydride copolymer, α-olefin/maleic anhydride copolymer amic acid resin, salt of α-olefin/maleic anhydride copolymer amic acid resin, polycarboxylate calcium sequestrants, or mixtures thereof;
where the coating base is an architectural paint, architectural stain, or architectural clear coating;
where the α-olefin is selected from styrene or α-methyl styrene; and
where the silicone polyether, alkali metal salt of silicone polyether carboxylate, ammonium compound or amine salt of silicone polyether carboxylate is from formulas (I) or (II): 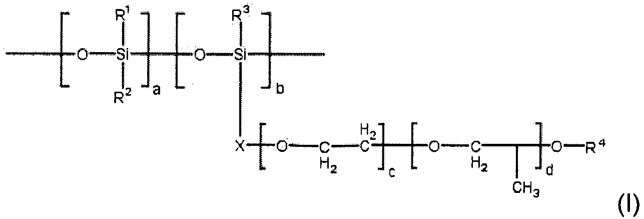 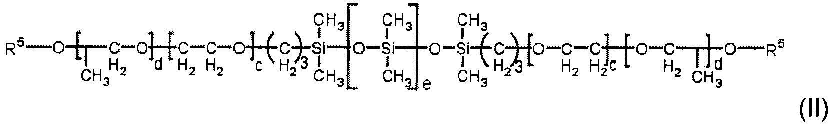 wherein
R¹, R², and R³ are independently C₁-C₈ alkyl groups;
X is a linear or branched C₁-C₄ alkylene group;
R⁴ is independently H or -C(O)-Y-C(O)O⁻M⁺;
Y is a linear or branched, saturated or unsaturated C₁-C₅ alkylene group;
M is independently H, alkali metal, NH₄⁺, dialkyl ammonium cation, or amine cation;
a and b are independently integers of 1 to 40 where a+b is an integer of at least 2; and
c and d are independently integers of 0 to 20 where c+d is an integer of at least 1;
R⁵ is H, a C₁-C₅ alkyl group, or -C(O)-Y-C(O)O⁻M⁺; and
e is an integer of 1 to 40.

2. The coating composition of claim 1, where the additive compound is selected from a silicone polyether, alkali metal salt of silicone polyether carboxylate, ammonium compound or amine salt of silicone polyether carboxylate, or mixtures thereof, of formulas (I) or (II) as defined above.

3. The coating composition of claim 1, where the additive compound is selected from an alkali metal salt of poly(meth)acrylic acid, an ammonium compound salt of poly(meth)acrylic acid, an amine salt of poly(meth)acrylic acid, or mixtures thereof.

4. The coating composition of claim 1, where the additive compound is selected from an alkali metal salt of hydrolyzed α-olefin/maleic anhydride copolymer, ammonium compound or amine salt of hydrolyzed α-olefin/maleic anhydride copolymer, alkali metal salt of esterified α-olefin/maleic anhydride copolymer, ammonium compound or amine salt of esterified α-olefin/maleic anhydride copolymer, α-olefin/maleic anhydride copolymer amic acid resin, salt of α-olefin/maleic anhydride copolymer amic acid resin, or mixtures thereof
where the α-olefin is selected from styrene or α-methyl styrene.

5. The coating composition of claim 1, where the additive compound is a polycarboxylic acid calcium sequestrant or mixture of polycarboxylic acid calcium sequestrants.

6. The coating composition of claim 2, where the additive compound further comprises at least one of an alkali metal salt of poly(meth)acrylic acid or copolymer thereof, ammonium compound or amine salt of poly(meth)acrylic acid or copolymer thereof, alkali metal salt of hydrolyzed α-olefin/maleic anhydride copolymer, ammonium compound or amine salt of hydrolyzed α-olefin/maleic anhydride copolymer, alkali metal salt of esterified α-olefin/maleic anhydride copolymer, ammonium compound or amine salt of esterified α-olefin/maleic anhydride copolymer, α-olefin/maleic anhydride copolymer amic acid resin, salt of α-olefin/maleic anhydride copolymer amic acid resin, polycarboxylic acid calcium sequestrants, or mixtures thereof.

7. The coating composition of claim 3, where the additive compound further comprises at least one of a silicone polyether, alkali metal salt of silicone polyether carboxylate, ammonium compound or amine salt of silicone polyether carboxylate, alkali metal salt of hydrolyzed α-olefin/maleic anhydride copolymer, ammonium compound or amine salt of hydrolyzed α-olefin/maleic anhydride copolymer, alkali metal salt of esterified α-olefin/maleic anhydride copolymer, ammonium compound or amine salt of esterified α-olefin/maleic anhydride copolymer, α-olefin/maleic anhydride copolymer amic acid resin, salt of α-olefin/maleic anhydride copolymer amic acid resin, polycarboxylic acid calcium sequestrants, or mixtures thereof.

8. The coating composition of claim 4, where the additive compound further comprises at least one of an alkali metal salt of poly(meth)acrylic acid or copolymer thereof, ammonium compound or amine salt of poly(meth)acrylic acid or copolymer thereof, silicone polyether, alkali metal salt of silicone polyether carboxylate, ammonium compound or amine salt of silicone polyether carboxylate, polycarboxylic acid calcium sequestrants, or mixtures thereof.

9. The coating composition of claim 5, where the additive compound further comprises at least one of an alkali metal salt of poly(meth)acrylic acid or copolymer thereof, ammonium compound or amine salt of poly(meth)acrylic acid or copolymer thereof, silicone polyether, alkali metal salt of silicone polyether carboxylate, ammonium compound or amine salt of silicone polyether carboxylate, alkali metal salt of hydrolyzed α-olefin/maleic anhydride copolymer, ammonium compound or amine salt of hydrolyzed α-olefin/maleic anhydride copolymer, alkali metal salt of esterified α-olefin/maleic anhydride copolymer, ammonium compound or amine salt of esterified α-olefin/maleic anhydride copolymer, α-olefin/maleic anhydride copolymer amic acid resin, salt of α-olefin/maleic anhydride copolymer amic acid resin, or mixtures thereof.

10. The coating composition of claims 1-9, further comprising a hydrophobic surface effect agent.

11. The coating composition of claim 10 wherein the hydrophobic surface effect agent is selected from the group consisting of fatty acid ester of cyclic or acyclic polyols, fatty esters of polycarboxylic acids, hydrophobic non-fluorinated cationic acrylic polymers, hydrophobic non-fluorinated anionic acrylic polymers, hydrophobic non-fluorinated nonionic acrylic polymers, partially fluorinated urethanes, hydrophobic non-fluorinated urethanes, cationic partially fluorinated acrylic polymers or copolymers, nonionic partially fluorinated acrylic polymers or copolymers, partially fluorinated acrylamide polymers or copolymers, fluorinated or non-fluorinated phosphates, fluorinated ethoxylates, fluorinated or non-fluorinated organosilanes, silicones, waxes, and mixtures thereof.

12. The coating composition of claims 1, 2, 3, 4, 5, 6, 7, 8, 9, 10, or 11 comprising 0.2 to 5% by weight of the additive compound, based on the total solids weight of the coating composition.

13. The coating composition of claims 1, 2, 3, 4, 5, 6, 7, 8, 9, 10, 11, or 12, where the coating base is in the form of an interior house paint, exterior house paint, architectural stain, or architectural clear coating and where the coating base comprises a polymer resin selected from the group consisting of an acrylic polymer, epoxy polymer, vinyl polymer, and polyurethane polymer.

14. An article comprising a substrate coated with the coating composition of claims 1, 2, 3, 4, 5, 6, 7, 8, 9, 10, 11, 12, or 13, where the substrate is unglazed concrete, brick, tile, granite, limestone, marble, grout, mortar, statuary, monument, wood, composite material, terrazzo, gypsum board, wall or ceiling panel, or a combination thereof, preferably where the coating has a thickness of at least 0.00254 mm (0.1 mils).

15. A method of imparting a surface effect to an article comprising contacting a surface of the article with a coating composition,
wherein the coating comprises a coating base and 0.1 to 10% by weight of an additive compound, based on the total solids weight of the coating,
where the additive compound is at least one of an alkali metal salt of poly(meth)acrylic acid, ammonium compound or amine salt of poly(meth)acrylic acid, silicone polyether, alkali metal salt of silicone polyether carboxylate, ammonium compound or amine salt of silicone polyether carboxylate, alkali metal salt of hydrolyzed α-olefin/maleic anhydride copolymer, ammonium compound or amine salt of hydrolyzed α-olefin/maleic anhydride copolymer, alkali metal salt of esterified α-olefin/maleic anhydride copolymer, ammonium compound or amine salt of esterified α-olefin/maleic anhydride copolymer, α-olefin/maleic anhydride copolymer amic acid resin, salt of α-olefin/maleic anhydride copolymer amic acid resin, polycarboxylic acid calcium sequestrants, or mixtures thereof;
where the coating base is an architectural paint, architectural stain, or architectural clear coating;
where the α-olefin is selected from styrene or α-methyl styrene; and where the silicone polyether, alkali metal salt of silicone polyether carboxylate, ammonium compound or amine salt of silicone polyether carboxylate is from formulas (I) or (II): 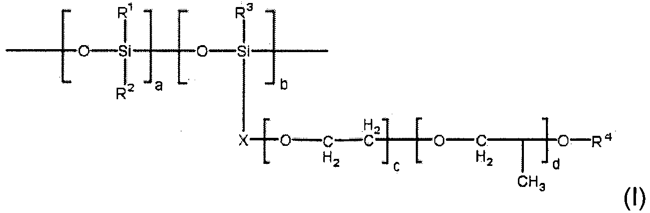 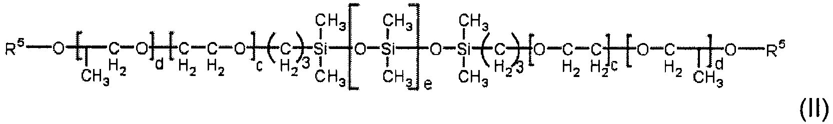 wherein
R¹, R², and R³ are independently C₁-C₈ alkyl groups;
X is a linear or branched C₁-C₄ alkylene group;
R⁴ is independently H or -C(O)-Y-C(O)O⁻M⁺;
Y is a linear or branched, saturated or unsaturated C₁-C₅ alkylene group;
M is independently H, alkali metal, NH₄⁺, dialkyl ammonium cation, or amine cation;
a and b are independently integers of 1 to 40 where a+b is an integer of at least 2; and
c and d are independently integers of 0 to 20 where c+d is an integer of at least 1;
R⁵ is H, a C₁-C₅ alkyl group, or -C(O)-Y-C(O)O⁻M⁺; and
e is an integer of 1 to 40.

## Patentansprüche

1. Beschichtungszusammensetzung umfassend eine Beschichtungsgrundierung und 0,1 bis 10 Gew.-% einer Zusatzmittelverbindung, auf das Gesamtfeststoffgewicht der Beschichtung bezogen,
wobei die Zusatzmittelverbindung mindestens eine ist von einem Alkalimetallsalz von Poly(meth)acrylsäure, einer Ammoniumverbindung oder einem Aminsalz von Poly(meth)acrylsäure, Siliconpolyether, Alkalimetallsalz von Siliconpolyethercarboxylat, einer Ammoniumverbindung oder einem Aminsalz von Siliconpolyethercarboxylat, einem Alkalimetallsalz von hydrolysiertem α-Olefin-Maleinsäureanhydrid-Copolymer, einer Ammoniumverbindung oder einem Aminsalz von hydrolysiertem α-Olefin-Maleinsäureanhydrid-Copolymer, einem Alkalimetallsalz von verestertem α-Olefin-Maleinsäureanhydrid-Copolymer, einer Ammoniumverbindung oder einem Aminsalz von verestertem α-Olefin-Maleinsäureanhydrid-Copolymer, einem α-Olefin-Maleinsäureanhydrid-Copolymer-Amidsäureharz, Salz von α-Olefin-Maleinsäureanhydrid-Copolymer-Amidsäureharz, Polycarboxylatcalciumsequestranten oder Mischungen davon;
wobei die Beschichtungsgrundierung ein Bautenanstrichmittel, eine Bautenfärbemittel oder Bautenklarbeschichtung ist;
wobei das α-Olefin ausgewählt ist aus Styrol oder α-Methylstyrol; und
wobei der Siliconpolyether, das Alkalimetallsalz von Siliconpolyethercarboxylat, die Ammoniumverbindung oder das Aminsalz von Siliconpolyethercarboxylat aus den Formeln (I) oder (II) stammt 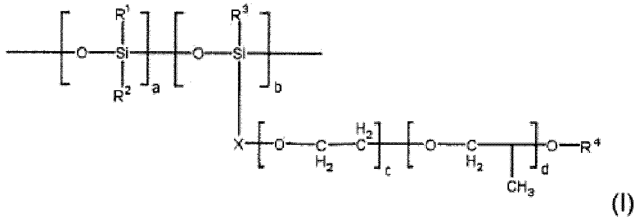 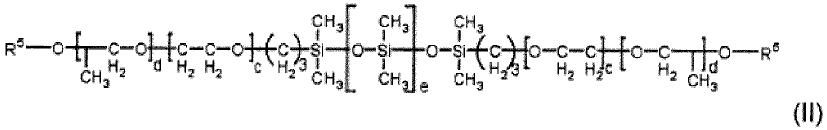 wobei
R¹, R² und R³ unabhängig C₁-C₈-Alkylgruppen sind;
X eine lineare oder verzweigte C₁-C₄-Alkylengruppe ist;
R⁴ unabhängig H oder -C(O)-Y-C(O)O⁻M⁺ ist;
Y eine lineare oder verzweigte, gesättigte oder ungesättigte C₁-C₅-Alkylengruppe ist;
M unabhängig H, Alkalimetall, NH₄⁺, Dialkylammoniumkation oder Aminkation ist;
a und b unabhängig ganze Zahlen von 1 bis 40 sind, wobei a+b eine ganze Zahl von mindestens 2 ist; und
c und d unabhängig ganze Zahlen von 0 bis 20 sind, wobei c+d eine ganze Zahl von mindestens 1 ist;
R⁵ H, eine C₁-C₅-Alkylgruppe oder -C(O)-Y-C(O)O⁻M⁺ ist ; und
e eine ganze Zahl von 1 bis 40 ist.

2. Beschichtungszusammensetzung nach Anspruch 1, wobei die Zusatzmittelverbindung ausgewählt ist aus einem Siliconpolyether, Alkalimetallsalz von Siliconpolyethercarboxylat, einer Ammoniumverbindung oder einem Aminsalz von Siliconpolyethercarboxylat oder Mischungen davon der Formeln (I) oder (II), wie oben definiert.

3. Beschichtungszusammensetzung nach Anspruch 1, wobei die Zusatzmittelverbindung ausgewählt ist aus einem Alkalimetallsalz von Poly(meth)acrylsäure, einem Ammoniumverbindungssalz von Poly(meth)acrylsäure, einem Aminsalz von Poly(meth)acrylsäure oder Mischungen davon.

4. Beschichtungszusammensetzung nach Anspruch 1, wobei die Zusatzmittelverbindung ausgewählt ist aus einem Alkalimetallsalz von hydrolysiertem α-Olefin-Maleinsäureanhydrid-Copolymer, einer Ammoniumverbindung oder einem Aminsalz von hydrolysiertem α-Olefin-Maleinsäureanhydrid-Copolymer, einem Alkalimetallsalz von verestertem α-Olefin-Maleinsäureanhydrid-Copolymer, einer Ammoniumverbindung oder einem Aminsalz von verestertem α-Olefin-Maleinsäureanhydrid-Copolymer, a-Olefin-Maleinsäureanhydrid-Copolymer-Amidsäureharz, Salz von α-Olefin-Maleinsäureanhydrid-Copolymer-Amidsäureharz oder Mischungen davon,
wobei das α-Olefin ausgewählt wird aus Styrol oder α-Methylstyrol.

5. Beschichtungszusammensetzung nach Anspruch 1, wobei die Zusatzmittelverbindung ein Polycarbonsäurecalciumsequestrant oder eine Mischung von Polycarbonsäurecalciumsequestranten ist.

6. Beschichtungszusammensetzung nach Anspruch 2, wobei die Zusatzmittelverbindung ferner mindestens eines umfasst von einem Alkalimetallsalz von Poly(meth)acrylsäure oder einem Copolymer davon, einer Ammoniumverbindung oder einem Aminsalz von Poly(meth)acrylsäure oder einem Copolymer davon, Alkalimetallsalz von hydrolysiertem α-Olefin-Maleinsäureanhydrid-Copolymer, einer Ammoniumverbindung oder einem Aminsalz von hydrolysiertem α-Olefin-Maleinsäureanhydrid-Copolymer, Alkalimetallsalz von verestertem α-Olefin-Maleinsäureanhydrid-Copolymer, einer Ammoniumverbindung oder einem Aminsalz von verestertem α-Olefin-Maleinsäureanhydrid-Copolymer, α-Olefin-Maleinsäureanhydrid-Copolymer-Amidsäureharz, Salz von α-Olefin-Maleinsäureanhydrid-Copolymer-Amidsäureharz, Polycarbonsäurecalciumsequestranten oder Mischungen davon.

7. Beschichtungszusammensetzung nach Anspruch 3, wobei die Zusatzmittelverbindung ferner mindestens eines umfasst von einem Siliconpolyether, Alkalimetallsalz von Siliconpolyethercarboxylat, einer Ammoniumverbindung oder einem Aminsalz von Siliconpolyethercarboxylat, Alkalimetallsalz von hydrolysiertem α-Olefin-Maleinsäureanhydrid-Copolymer, einer Ammoniumverbindung oder einem Aminsalz von hydrolysiertem α-Olefin-Maleinsäureanhydrid-Copolymer, einem Alkalimetallsalz von verestertem α-Olefin-Maleinsäureanhydrid-Copolymer, einer Ammoniumverbindung oder einem Aminsalz von verestertem α-Olefin-Maleinsäureanhydrid-Copolymer, a-Olefin-Maleinsäureanhydrid-Copolymer-Amidsäureharz, Salz von α-Olefin-Maleinsäureanhydrid-Copolymer-Amidsäureharz, Polycarbonsäurecalciumsequestranten oder Mischungen davon.

8. Beschichtungszusammensetzung nach Anspruch 4, wobei die Zusatzmittelverbindung ferner mindestens eines umfasst von einem Alkalimetallsalz von Poly(meth)acrylsäure oder Copolymer davon, einer Ammoniumverbindung oder einem Aminsalz von Poly(meth)acrylsäure oder einem Copolymer davon, einem Siliconpolyether, Alkalimetallsalz von Siliconpolyethercarboxylat, einer Ammoniumverbindung oder einem Aminsalz von Siliconpolyethercarboxylat, Polycarbonsäurecalciumsequestranten oder Mischungen davon.

9. Beschichtungszusammensetzung nach Anspruch 5, wobei die Zusatzmittelverbindung ferner mindestens eines umfasst von einem Alkalimetallsalz von Poly(meth)acrylsäure oder einem Copolymer davon, einer Ammoniumverbindung oder einem Aminsalz von Poly(meth)acrylsäure oder einem Copolymer davon, einem Siliconpolyether, Alkalimetallsalz von Siliconpolyethercarboxylat, einer Ammoniumverbindung oder einem Aminsalz von Siliconpolyethercarboxylat, Alkalimetallsalz von hydrolysiertem α-Olefin-Maleinsäureanhydrid-Copolymer, einer Ammoniumverbindung oder einem Aminsalz von hydrolysiertem α-Olefin-Maleinsäureanhydrid-Copolymer, Alkalimetallsalz von verestertem α-Olefin-Maleinsäureanhydrid-Copolymer, einer Ammoniumverbindung oder einem Aminsalz von verestertem α-Olefin-Maleinsäureanhydrid-Copolymer, α-Olefin-Maleinsäureanhydrid-Copolymer-Amidsäureharz, Salz von α-Olefin-Maleinsäureanhydrid-Copolymer-Amidsäureharz oder Mischungen davon.

10. Beschichtungszusammensetzung nach den Ansprüchen 1-9, ferner ein hydrophobes Oberflächeneffektmittel umfassend.

11. Beschichtungszusammensetzung nach Anspruch 10, wobei das hydrophobe Oberflächeneffektmittel aus der Gruppe ausgewählt wird bestehend aus Fettsäureester von cyclischen oder acyclischen Polyolen, Fettsäureestern von Polycarbonsäuren, hydrophoben nichtfluorierten kationischen acrylischen Polymeren, hydrophoben nichtfluorierten anionischen acrylischen Polymeren, hydrophoben nichtfluorierten nonionischen acrylischen Polymeren, teilweise fluorierten Urethanen, hydrophoben nichtfluorierten Urethanen, kationischen teilweise fluorierten acrylischen Polymeren oder Copolymeren, nichtionischen teilweise fluorierten acrylischen Polymeren oder Copolymeren, teilweise fluorierten Acrylamidpolymeren oder -copolymeren, fluorierten oder nichfluorierten Phosphaten, fluorierten Ethoxylaten, fluorierten oder nichfluorierten Organosilanen, Siliconen, Wachsen und Mischungen davon.

12. Beschichtungszusammensetzung nach den Ansprüchen 1, 2, 3, 4, 5, 6, 7, 8, 9, 10 oder 11, umfassend 0,2 bis 5 Gew.-% der Zusatzmittelverbindung, auf das gesamte Feststoffgewicht der Beschichtungszusammensetzung bezogen.

13. Beschichtungszusammensetzung nach den Ansprüchen 1, 2, 3, 4, 5, 6, 7, 8, 9, 10, 11 oder 12, wobei die Beschichtungsgrundierung in Form einer Innenfarbe, Fassadenfarbe, Bautenfärbemittel oder Bautenklarbeschichtung vorliegt und wobei die Beschichtungsgrundierung ein Polymerharz umfasst ausgewählt aus der Gruppe bestehend aus einem acrylischen Polymer, Epoxypolymer, Vinylpolymer und Polyurethanpolymer.

14. Artikel umfassend ein Substrat, das mit der Beschichtungszusammensetzung nach den Ansprüchen 1, 2, 3, 4, 5, 6, 7, 8, 9, 10, 11, 12 oder 13 beschichtet ist, wobei das Substrat unglasierter Beton, Backstein, Ziegel, Granit, Kalkstein, Marmor, Fugenmörtel, Mörtel, Statuen, Denkmal, Holz, Verbundstoffmaterial, Terrazzo, Gipsplatte, Wand- oder Deckenplatte oder eine Kombination davon ist, wobei bevorzugt die Beschichtung eine Dicke von mindestens 0,00254 mm (0,1 mil) aufweist.

15. Verfahren zum Verleihen eines Oberflächeneffekts an einen Artikel, umfassend In-Kontakt-Bringen einer Oberfläche des Artikels mit einer Beschichtungszusammensetzung,
wobei die Beschichtung eine Beschichtungsgrundierung und 0,1 bis 10 Gew.-% einer Zusatzmittelverbindung, auf das Gesamtfeststoffgewicht der Beschichtung bezogen, umfasst,
wobei die Zusatzmittelverbindung mindestens eine ist von einem Alkalimetallsalz von Poly(meth)acrylsäure, einer Ammoniumverbindung oder einem Aminsalz von Poly(meth)acrylsäure, Siliconpolyether, Alkalimetallsalz von Siliconpolyethercarboxylat, einer Ammoniumverbindung oder einem Aminsalz von Siliconpolyethercarboxylat, Alkalimetallsalz von hydrolysiertem α-Olefin-Maleinsäureanhydrid-Copolymer, einer Ammoniumverbindung oder einem Aminsalz von hydrolysiertem α-Olefin-Maleinsäureanhydrid-Copolymer, einem Alkalimetallsalz von verestertem α-Olefin-Maleinsäureanhydrid-Copolymer, einer Ammoniumverbindung oder einem Aminsalz von verestertem α-Olefin-Maleinsäureanhydrid-Copolymer, α-Olefin-Maleinsäureanhydrid-Copolymer-Amidsäureharz, Salz von α-Olefin-Maleinsäureanhydrid-Copolymer-Amidsäureharz, Polycarbonsäurecalciumsequestranten oder Mischungen davon;
wobei die Beschichtungsgrundierung ein Bautenanstrichmittel, ein Bautenfärbemittel oder eine Bautenklarbeschichtungist;
wobei das α-Olefin ausgewählt wird aus Styrol oder einem α-Methylstyrol; und wobei der Siliconpolyether, das Alkalimetallsalz von Siliconpolyethercarboxylat, die Ammoniumverbindung oder das Aminsalz von Siliconpolyethercarboxylat aus den Formeln (I) oder (II) stammt 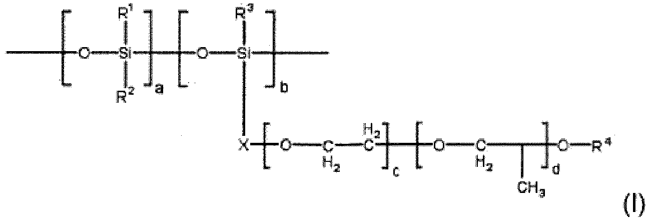 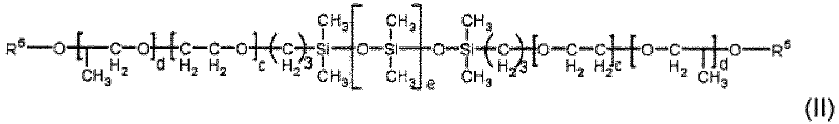 wobei
R¹, R² und R³ unabhängig C₁-C₈-Alkylgruppen sind;
X eine lineare oder verzweigte C₁-C₄-Alkylengruppe ist;
R⁴ unabhängig H oder -C(O)-Y-C(O)O⁻M⁺ ist;
Y eine lineare oder verzweigte, gesättigte oder ungesättigte C₁-C₅-Alkylengruppe ist;
M unabhängig H, Alkalimetall, NH₄⁺, Dialkylammoniumkation oder Aminkation ist;
a und b unabhängig ganze Zahlen von 1 bis 40 sind, wobei a+b eine ganze Zahl von mindestens 2 ist; und
c und d unabhängig ganze Zahlen von 0 bis 20 sind, wobei c+d eine ganze Zahl von mindestens 1 ist;
R⁵ H, eine C₁-C₅-Alkylgruppe oder -C(O)-Y-C(O)O⁻M⁺ ist ; und
e eine ganze Zahl von 1 bis 40 ist.

## Revendications

1. Composition de revêtement comprenant une base de revêtement et de 0,1 à 10 % en poids d'un composé additif, sur la base du poids total des matières solides du revêtement,
dans laquelle le composé additif est au moins un parmi un sel de métal alcalin de poly(acide (méth)acrylique), d'un composé d'ammonium ou d'un sel d'amine de poly(acide (méth)acrylique), d'un polyéther de silicone, d'un sel de métal alcalin de polyéther carboxylate de silicone, d'un composé d'ammonium ou d'un sel d'amine de polyéther carboxylate de silicone, d'un sel de métal alcalin de copolymère hydrolysé d'a-oléfine/anhydride maléique, d'un composé d'ammonium ou d'un sel d'amine de copolymère hydrolysé d'a-oléfine/anhydride maléique, d'un sel de métal alcalin de copolymère estérifié d'a-oléfine/anhydride maléique, d'un composé d'ammonium ou d'un sel d'amine de copolymère estérifié d'a-oléfine/anhydride maléique, d'une résine d'acide amique de copolymère d'α-oléfine/anhydride maléique, d'un sel de résine d'acide amique de copolymère d'a-oléfine/anhydride maléique, de séquestrants polycarboxylate du calcium, ou des mélanges de ceux-ci;
dans laquelle la base de revêtement est une peinture architecturale, un colorant architectural, ou un revêtement architectural clair;
dans laquelle l'a-oléfine est sélectionnée parmi le styrène ou l'a-méthyl styrène; et dans laquelle le polyéther de silicone, le sel de métal alcalin de polyéther carboxylate de silicone, le composé d'ammonium ou le sel d'amine de polyéther carboxylate de silicone provient des formules (I) ou (II): 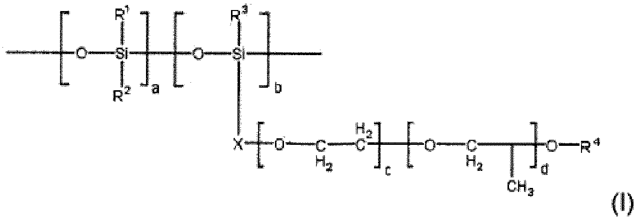 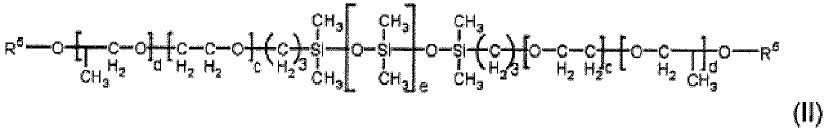 Où
R¹, R², et R³ sont indépendamment des groupes alkyle en C₁ à C₈;
X est un groupe alcylène en C₁ à C₄ linéaire ou ramifié;
R⁴ est indépendamment H ou -C(O)-Y-C(O)O⁻M⁺;
Y est un groupe alcylène en C₁ à C₅ linéaire ou ramifié, saturé ou insaturé;
M est indépendamment H, un métal alcalin, NH₄⁺, un cation de dialkyl ammonium, ou un cation amine;
a et b sont indépendamment des nombres entiers d'une valeur de 1 à 40 où a + b est un nombre entier d'une valeur d'au moins 2; et
c et d sont indépendamment des nombres entiers d'une valeur de 0 à 20 où c + d est un nombre entier d'une valeur d'au moins 1;
R⁵ est H, un groupe alkyle en C₁ à C₅, ou -C(O)-Y-C(O)O-M⁺; et
e est un nombre entier d'une valeur de 1 à 40,

2. Composition de revêtement selon la revendication 1, où le composé additif est sélectionné parmi un polyéther de silicone, un sel de métal alcalin de polyéther carboxylate de silicone, un composé d'ammonium ou un sel d'amine de polyéther carboxylate de silicone, ou leurs mélanges, de formules (I) ou (II) telles que définies ci-dessus.

3. Composition de revêtement selon la revendication 1, dans laquelle le composé additif est sélectionné parmi un sel de métal alcalin de poly(acide (méth)acrylique), un sel composé d'ammonium de poly(acide (méth)acrylique), un sel d'amine de poly(acide (méth)acrylique), ou des mélanges de ceux-ci.

4. Composition de revêtement selon la revendication 1, où l'additif est sélectionné parmi un sel de métal alcalin de copolymère hydrolysé d'a-oléfine/anhydride maléique, un composé d'ammonium ou d'un sel d'amine de copolymère hydrolysé d'a-oléfine/anhydride maléique, un sel de métal alcalin de copolymère estérifié d'a-oléfine/anhydride maléique, un composé d'ammonium ou un sel d'amine de copolymère estérifié d'a-oléfine/anhydride maléique, une résine d'acide amique de copolymère d'a-oléfine/anhydride maléique, un sel de résine d'acide amique de copolymère d'a-oléfine/anhydride maléique, ou des mélanges de ceux-ci
où l'a-oléfine est sélectionnée parmi le styrène ou l'a-méthyl styrène.

5. Composition de revêtement selon la revendication 1, dans laquelle le composé additif est un séquestrant poly(acide carboxylique) du calcium ou un mélange de séquestrants poly(acide carboxylique) du calcium.

6. Composition de revêtement selon la revendication 2, dans laquelle le composé additif comprend en outre au moins l'un parmi un sel de métal alcalin de poly(acide (méth)acrylique) ou d'un copolymère de celui-ci, d'un composé d'ammonium ou d'un sel d'amine de poly(acide (méth)acrylique) ou d'un copolymère de celui-ci, d'un sel de métal alcalin de copolymère hydrolysé d'a-oléfine/anhydride maléique, d'un composé d'ammonium ou d'un sel d'amine de copolymère hydrolysé d'a-oléfine/anhydride maléique, d'un sel de métal alcalin de copolymère estérifié d'a-oléfine/anhydride maléique, d'un composé d'ammonium ou d'un sel d'amine de copolymère estérifié d'a-oléfine/anhydride maléique, d'une résine d'acide amique de copolymère d'a-oléfine/anhydride maléique, d'un sel de résine d'acide amique de copolymère d'α-oléfine/anhydride maléique, de séquestrants poly(acide carboxylique) du calcium, ou des mélanges de ceux-ci.

7. Composition de revêtement selon la revendication 3, dans laquelle le composé additif comprend en outre au moins l'un parmi un polyéther de silicone, d'un sel de métal alcalin de polyéther carboxylate de silicone, d'un composé d'ammonium ou d'un sel d'amine de polyéther carboxylate de silicone, d'un sel de métal alcalin de copolymère hydrolysé d'a-oléfine/anhydride maléique, d'un composé d'ammonium ou d'un sel d'amine de copolymère hydrolysé d'a-oléfine/anhydride maléique, d'un sel de métal alcalin de copolymère estérifié d'a-oléfine/anhydride maléique, d'un composé d'ammonium ou d'un sel d'amine de copolymère estérifié d'α-oléfine/anhydride maléique, d'une résine d'acide amique de copolymère d'a-oléfine/anhydride maléique, d'un sel de résine d'acide amique de copolymère d'a-oléfine/anhydride maléique, de séquestrants poly(acide carboxylique) du calcium, ou des mélanges de ceux-ci.

8. Composition de revêtement selon la revendication 4, dans laquelle le composé additif comprend en outre au moins l'un parmi un sel de métal alcalin de poly(acide (méth)acrylique) ou d'un copolymère de celui-ci, d'un composé d'ammonium ou d'un sel d'amine de poly(acide (méth)acrylique) ou d'un copolymère de celui-ci, d'un polyéther de silicone, d'un sel de métal alcalin de polyéther carboxylate de silicone, d'un composé d'ammonium ou d'un sel d'amine de polyéther carboxylate de silicone, de séquestrants poly(acide carboxylique) du calcium, ou des mélanges de ceux-ci.

9. Composition de revêtement selon la revendication 5, dans laquelle le composé additif comprend en outre au moins l'un parmi un sel de métal alcalin de poly(acide (méth)acrylique) ou d'un copolymère de celui-ci, d'un composé d'ammonium ou d'un sel d'amine de poly(acide (méth)acrylique) ou d'un copolymère de celui-ci, d'un polyéther de silicone, d'un sel de métal alcalin de polyéther carboxylate de silicone, d'un composé d'ammonium ou d'un sel d'amine de polyéther carboxylate de silicone, d'un sel de métal alcalin de copolymère hydrolysé d'a-oléfine/anhydride maléique, d'un composé d'ammonium ou d'un sel d'amine de copolymère hydrolysé d'a-oléfine/anhydride maléique, d'un sel de métal alcalin de copolymère estérifié d'a-oléfine/anhydride maléique, d'un composé d'ammonium ou d'un sel d'amine de copolymère estérifié d'a-oléfine/anhydride maléique, d'une résine d'acide amique de copolymère d'a-oléfine/anhydride maléique, d'un sel de résine d'acide amique de copolymère d'a-oléfine/anhydride maléique, ou des mélanges de ceux-ci.

10. Composition de revêtement selon les revendications 1 à 9, comprenant en outre un agent à effet de surface hydrophobe.

11. Composition de revêtement selon la revendication 10, l'agent à effet de surface hydrophobe étant sélectionné dans le groupe constitué de l'ester d'acide gras de polyols cycliques ou acycliques, des esters gras de poly(acides carboxyliques), des polymères acryliques cationiques non fluorés hydrophobes, des polymères acryliques anioniques non fluorés hydrophobes, des polymères acryliques non ioniques non fluorés hydrophobes, des uréthanes partiellement fluorés, des uréthanes non fluorés hydrophobes, des polymères ou copolymères acryliques cationiques partiellement fluorés, des polymères ou copolymères acryliques non ioniques partiellement fluorés, des polymères ou copolymères d'acrylamide partiellement fluorés, des phosphates fluorés ou non fluorés, des éthoxylates fluorés, des organosilanes fluorés ou non fluorés, des silicones, des cires, et des mélanges de ceux-ci.

12. Composition de revêtement selon les revendications 1, 2, 3, 4, 5, 6, 7, 8, 9, 10 ou 11 comprenant de 0,2 à 5 % en poids du composé additif, sur la base du poids total des matières solides de la composition de revêtement.

13. Composition de revêtement selon les revendications 1, 2, 3, 4, 5, 6, 7, 8, 9, 10, 11 ou 12, dans laquelle la base de revêtement se présente sous la forme d'une peinture intérieure pour maison, d'une peinture extérieure pour maison, d'un colorant architectural, ou d'un revêtement architectural clair et dans laquelle la base de revêtement comprend une résine polymère sélectionnée dans le groupe constitué d'un polymère acrylique, d'un polymère époxy, d'un polymère de vinyle, et d'un polymère de polyuréthane.

14. Article comprenant un substrat revêtu de la composition de revêtement selon les revendications 1, 2, 3, 4, 5, 6, 7, 8, 9, 10, 11, 12 ou 13, où le substrat est du béton non vitrifié, une brique, une tuile, du granit, du calcaire, du marbre, de l'enduit, du mortier, une statue, un monument, du bois, un matériau composite, du granito, un panneau en gypse, un panneau de paroi ou de plafond, ou une combinaison de ceux-ci, préférablement où le revêtement présente une épaisseur d'au moins 0,00254 mm (0,1 mil).

15. Procédé permettant de conférer un effet de surface à un article comprenant la mise en contact d'une surface de l'article avec une composition de revêtement,
le revêtement comprenant une base de revêtement et de 0,1 à 10 % en poids d'un composé additif, sur la base du poids total des matières solides du revêtement,
dans lequel le composé additif est au moins l'un parmi un sel de métal alcalin de poly(acide (méth)acrylique), d'un composé d'ammonium ou d'un sel d'amine de poly(acide (méth)acrylique), d'un polyéther de silicone, d'un sel de métal alcalin de polyéther carboxylate de silicone, d'un composé d'ammonium ou d'un sel d'amine de polyéther carboxylate de silicone, d'un sel de métal alcalin de copolymère hydrolysé d'a-oléfine/anhydride maléique, d'un composé d'ammonium ou d'un sel d'amine de copolymère hydrolysé d'a-oléfine/anhydride maléique, d'un sel de métal alcalin de copolymère estérifié d'a-oléfine/anhydride maléique, d'un composé d'ammonium ou d'un sel d'amine de copolymère estérifié d'a-oléfine/anhydride maléique, d'une résine d'acide amique de copolymère d'a-oléfine/anhydride maléique, d'un sel de résine d'acide amique de copolymère d'a-oléfine/anhydride maléique, de séquestrants poly(acide carboxylique) du calcium, ou des mélanges de ceux-ci;
dans lequel la base de revêtement est une peinture architecturale, un colorant architectural, ou un revêtement architectural clair;
dans lequel l'α-oléfine est sélectionnée parmi le styrène ou l'a-méthyl styrène; et
dans lequel le polyéther de silicone, le sel de métal alcalin de polyéther carboxylate de silicone, le composé d'ammonium ou le sel d'amine de polyéther carboxylate de silicone provient des formules (I) ou (II): 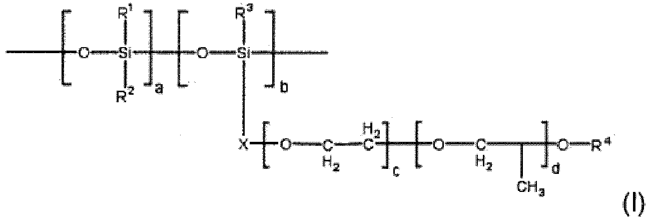 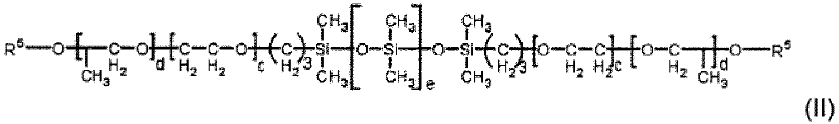 où
R¹, R², et R³ sont indépendamment des groupes alkyle en C₁ à C₈;
X est un groupe alcylène en C₁ à C₄ linéaire ou ramifié;
R⁴ est indépendamment H ou -C(O)-Y-C(O)O-M⁺;
Y est un groupe alcylène en C₁ à C₅ linéaire ou ramifié, saturé ou insaturé;
M est indépendamment H, un métal alcalin, NH₄⁺, un cation de dialkyl ammonium, ou un cation amine;
a et b sont indépendamment des nombres entiers d'une valeur de 1 à 40 où a + b est un nombre entier d'une valeur d'au moins 2; et
c et d sont indépendamment des nombres entiers d'une valeur de 0 à 20 où c + d est un nombre entier d'une valeur d'au moins 1;
R⁵ est H, un groupe alkyle en C₁ à C₅, ou -C(O)-Y-C(O)O⁻M⁺; et
e est un nombre entier d'une valeur de 1 à 40.
